(19) Europäisches Patentamt / European Patent Office / Office européen des brevets

(11) **EP 2 818 486 B1**

(12) **EUROPEAN PATENT SPECIFICATION**

(45) Date of publication and mention of the grant of the patent:
**13.12.2017 Bulletin 2017/50**

(51) Int Cl.:
**C08F 265/06** (2006.01)    **C09J 151/00** (2006.01)
**C08F 220/18** (2006.01)

(21) Application number: **14173721.3**

(22) Date of filing: **24.06.2014**

(54) **WATER-DISPERSED PRESSURE-SENSITIVE ADHESIVE COMPOSITION AND METHOD FOR PRODUCING SAME**

WASSERDISPERGIERTE DRUCKEMPFINDLICHE HAFTKLEBERZUSAMMENSETZUNG UND VERFAHREN ZUR HERSTELLUNG DAVON

COMPOSITION ADHÉSIVE SENSIBLE À LA PRESSION DISPERSÉE DANS L'EAU ET PROCÉDÉ DE PRODUCTION ASSOCIÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.06.2013 JP 2013137494**

(43) Date of publication of application:
**31.12.2014 Bulletin 2015/01**

(73) Proprietor: **NITTO DENKO CORPORATION**
**Ibaraki-shi, Osaka 567-8680 (JP)**

(72) Inventors:
• **Koso, Masatsugu**
  **Ibaraki-shi, Osaka 567-8680 (JP)**
• **Chai, Lee Lee**
  **40300 Shah Alam (MY)**

(74) Representative: **Grünecker Patent- und Rechtsanwälte**
**PartG mbB**
**Leopoldstraße 4**
**80802 München (DE)**

(56) References cited:
**JP-A- 2002 256 244    US-A1- 2013 052 457**

**Description**

BACKGROUND OF THE INVENTION

1. Field of the Invention

The present invention relates to a water-dispersed pressure-sensitive adhesive composition and a method for producing the same.

2. Description of the Related Art

In general, pressure-sensitive adhesive (PSA) exists as a soft solid (viscoelastic material) in a room temperature range and has a property to adhere easily to adherend with some pressure applied. By taking advantage of such features, PSA has been widely used in various fields, for example, in a PSA sheet form having PSA formed in film (a PSA layer). Examples of a typical method for forming the PSA layer include a method where a PSA composition containing an adhesive component in a liquid medium is applied to a suitable surface and allowed to dry. Lately, from the standpoint of environmental health, etc., in comparison with a solvent-based PSA composition in which an adhesive component is dissolved in an organic solvent, preference tends to be placed on a water-based PSA composition in which PSA particles are dispersed in an aqueous solvent. Technical literatures related to water-dispersed PSA compositions include Japanese Patent Application Publication No. 2012-128391.

SUMMARY OF THE INVENTION

Various properties are demanded in PSA according to the intended use. Among these properties, some are difficult to combine at a high level, such that when one property is to be increased, another property tends to decrease. One example of such difficult combination of properties is impact resistance and repulsion resistance. Herein, the term "impact resistance" refers to an ability of an adhesive joint formed of PSA to resist impact to maintain adhesion. The term "repulsion resistance" refers to an ability to maintain a member adhered in an elastically deformed shape via PSA to adherend in the elastically deformed shape. In other words, it refers to an ability to resist a repulsive force of the member trying to return from the elastically deformed shape to its original shape so as to maintain the adhesion between the member and adherend.

Japanese Patent Application Publication No. 2012-128391 discloses a technique where a plurality of monomer emulsions different in composition are subjected to stepwise emulsion polymerization to produce a water-dispersed PSA composition. Even with application of such a technique, however, it has been difficult to obtain a water-dispersed PSA composition capable of forming a PSA that combines the two properties, namely impact resistance and repulsion resistance, at a high level.

The present invention has been made in view of such a circumstance, with an objective thereof being to provide a water-dispersed PSA composition capable of forming a PSA combining impact resistance and repulsion resistance at a high level as well as a method for producing the same. Another related objective is to provide a PSA sheet formed with such a water-dispersed PSA composition.

The water-dispersed PSA composition disclosed herein comprises an aqueous solvent, an emulsifier and polymer particles. The polymer particles are dispersed in the aqueous solvent. The polymer particles comprise a particle that has a core-shell structure. The particle having the core-shell structure comprises an acrylic polymer in at least one of its core and shell. In the particle having the core-shell structure, a polymer $P_{core}$ constituting the core has a glass transition temperature $T_{core}$ and a polymer $P_{shell}$ constituting the shell has a glass transition temperature $T_{shell}$, with $T_{core}$ being higher than $T_{shell}$ and $T_{shell}$ being below -55°C. The emulsifier content in the PSA composition is lower than 3.5 parts by weight relative to 100 parts by weight of the polymer particles. The average particle diameter of the water-dispersed PSA composition is smaller than 0.3 $\mu$m when measured with respect to the PSA composition by a laser diffraction/scattering method. A water-dispersed PSA composition having such a constitution allows for formation of a PSA combining impact resistance and repulsion resistance at a high level.

In the following, a particle having a core-shell structure may be indicated as a "core-shell particle". In the present description, a value indicating an amount of emulsion is based on the active ingredient content unless otherwise specified.

With respect to the core-shell particle in the art disclosed herein, $T_{shell}$ is below -55 °C. $T_{core}$ is preferably higher by 80 °C or more than $T_{shell}$. According to a core-shell particle that satisfies such $T_{shell}$ and $T_{core}$, a PSA with greater impact resistance can be obtained.

The PSA composition disclosed herein can be made preferably in an embodiment where a PSA formed from the PSA composition has a gel fraction of 70% by weight or higher. A PSA having such a gel fraction may exhibit higher repulsion resistance.

In the core-shell particle in the art disclosed herein, the SP value ($SP_{core}$) of $P_{core}$ and the SP value ($SP_{shell}$) of $P_{shell}$ preferably satisfies a relationship defined by the next equation:

$$-0.35 < (SP_{core} - SP_{shell}) < -0.05$$

A core-shell particle satisfying such a relationship is preferable from the standpoint of the ease of manufacture of a water-dispersed PSA composition comprising the core-shell particle. This is advantageous also from the standpoint of performance stability of a PSA formed from the PSA composition.

The water-dispersed PSA composition production method disclosed herein comprises a first step of obtaining a first dispersion that comprises seed particles obtainable by polymerizing a first monomeric starting material and further comprises an emulsifier and an aqueous solvent. It also comprises a second step of adding a second monomeric starting material to the first dispersion to carry out polymerization. By the second step, a second dispersion comprising polymer particles dispersed in the aqueous solvent is obtained. At least one of the first monomeric starting material and the second monomeric starting material comprises an acrylic monomer. In the second step, it is preferable that to the first dispersion, the second monomeric starting material is added in a form of a monomer mixture essentially free of an emulsifier. The emulsifier content in the second dispersion is preferably lower than 3.5 parts by weight relative to 100 parts by weight of the polymer particles. The average particle diameter of the second dispersion is smaller than 0.3 $\mu$m when measured with respect to the second dispersion by a laser diffraction/scattering method. A water-dispersed PSA composition obtained by such a production method may allow for formation of a PSA combining impact resistance and repulsion resistance at a high level.

In a preferable embodiment of the production method, the SP value (SP2) of the polymer of the second monomeric starting material is greater than the SP value (SP1) of the polymer constituting the seed particles. According to such an embodiment, the polymer of the second monomeric starting material is likely to be formed on seed particles. This is preferable from the standpoint of the quality stability of the resulting water-dispersed PSA composition as well as the performance and its stability of a PSA formed from the PSA composition, etc.

The water-dispersed PSA composition production method disclosed herein can be preferably implemented in an embodiment such that when the first monomeric starting material has a weight M1 and the second monomeric starting material has a weight M2, the M2 to M1 ratio (M2/M1) is higher than 60/40. In other words, it is preferable that the amounts of seed particles and the second monomeric starting material are set so as to satisfy 60/40 < M2/M1. This is advantageous from the standpoint of the quality stability of the resulting water-dispersed PSA composition as well as the performance and its stability of a PSA formed from the PSA composition, etc.

In the water-dispersed PSA composition production method disclosed herein, as the first dispersion, it is possible to preferably use, for example, a dispersion prepared by subjecting a monomer emulsion to emulsion polymerization so as to form the seed particles, with the monomer emulsion being obtainable by emulsifying a mixture of the first monomeric starting material, the emulsifier and the aqueous solvent.

The PSA composition production method disclosed herein can be preferably employed as a method for producing a water-dispersed PSA composition disclosed herein. Accordingly, as another aspect, the PSA composition production method disclosed herein provides a water-dispersed PSA composition obtained by the production method.

This description also provides a PSA sheet comprising a PSA layer formed with a water-dispersed PSA composition disclosed herein. Such a PSA sheet is preferable since it can combine impact resistance and repulsion resistance at a high level.

BRIEF DESCRIPTION OF THE DRAWINGS

Fig. 1 shows a cross-sectional view schematically illustrating a constitution example of a PSA sheet.
Fig. 2 shows a cross-sectional view schematically illustrating another constitution example of a PSA sheet.
Fig. 3 shows a cross-sectional view schematically illustrating another constitution example of a PSA sheet.
Fig. 4 shows a cross-sectional view schematically illustrating another constitution example of a PSA sheet.
Fig. 5 shows a cross-sectional view schematically illustrating another constitution example of a PSA sheet.
Fig. 6 shows a cross-sectional view schematically illustrating another constitution example of a PSA sheet.
Fig. 7(a) and Fig. 7(b) show diagrams illustrating a test sample used for an impact resistance test.
Fig. 8(a) and Fig. 8(b) show diagrams illustrating a method for performing a repulsion resistance test.

DETAILED DESCRIPTION OF THE INVENTION

Preferred embodiments of the present invention are described below. Matters necessary to practice this invention other than those specifically referred to in this description may be understood as design matters based on the conventional art in the pertinent field for a person of ordinary skill in the art. The present invention can be practiced based on the contents disclosed in this description and common technical knowledge in the subject field.

In the drawings referenced below, a common reference numeral may be assigned to members or sites producing the same effects, and duplicated descriptions are sometimes omitted or simplified. The embodiments described in the drawings are schematized for clear illustration of the present invention, and do not necessarily represent the accurate sizes or reduction scales of the PSA sheet to be provided as an actual product by the present invention.

The term "PSA" in this description refers to, as described earlier, a material that exists as a soft solid (a viscoelastic material) in a room temperature range and has a property to adhere easily to adherend with some pressure applied. As defined in "Adhesion: Fundamental and Practice" by C. A. Dahlquist (McLaren & Sons (1966), P. 143), PSA referred to herein is a material that has a property satisfying complex tensile modulus $E^*$ (1Hz) < $10^7$ dyne/cm$^2$ (typically, a material that exhibits the described characteristics at 25 °C).

The term "base polymer" of a PSA in this description refers to the primary component among rubbery polymers contained in the PSA. The term "rubbery polymer" refers to a polymer that exhibits rubber elasticity in a temperature range at around room temperature. The term "primary component" in the present description refers to a component at a concentration exceeding 50 % by weight unless otherwise specified.

As used herein, the term "(meth)acryloyl" comprehensively refers to acryloyl and methacryloyl. Similarly, the terms "(meth)acrylate" and "(meth)acryl" comprehensively refer to acrylate and methacrylate, and acryl and methacryl, respectively. The term "(cyclo)alkyl" comprehensively refers to linear alkyl and cycloalkyl.

As used herein, the term "acrylic polymer" refers to a polymer comprising, as a monomeric unit constituting the polymer, a monomeric unit derived from a monomer having at least one (meth)acryloyl group per molecule. In the following, a monomer having at least one (meth)acryloyl group per molecule may be called "acrylic monomer". The acrylic polymer in this description is defined as a polymer comprising a monomeric unit derived from an acrylic monomer. Typical examples of such an acrylic polymer include an acrylic polymer whose monomer composition contains an acrylic monomer at higher than 50 % by weight.

As used herein, the term "polymer particle" means a particle comprising a polymer as the primary component.

As used herein, the term "core-shell particle" refers to a particle such that portions having different compositions from each other are present in the same particle while these portions within the particle are located position-wise on the inside (core) and the outside (shell). The shell is typically located, covering the entire outer surface of the core although not limited to this. A particle in which at least a region of the outer surface of the core is covered with the shell is included in the concept of the core-shell particle as referred to herein.

An average particle diameter in this description refers to a median diameter in a particle size distribution measured using a particle size analyzer based on a laser scattering/diffraction method, unless otherwise specified. More specifically, the average particle diameter can be measured by a method described later in the worked examples.

In this description, $T_{core}$ of polymer $P_{core}$ constituting the core refers to a value determined, with respect to a monomer composition corresponding to $P_{core}$, according to the Fox equation based on the glass transition temperature (Tg) values of homopolymers of the respective monomers and the weight fractions (copolymerization ratio values based on weight) of the monomers. The same applies to the $T_{shell}$ of polymer $P_{shell}$ constituting the shell.

In the present description, values indicating Tg are in "°C" unless otherwise informed.

As the Tg values of the homopolymers, values given in a known document are used. In the art disclosed herein, as the Tg values of the homopolymers, the following values are used specifically:

| | |
|---|---|
| 2-ethylhexyl acrylate | -70 °C |
| n-butyl acrylate | -55 °C |
| ethyl acrylate | -22 °C |
| methyl acrylate | 8 °C |
| methyl methacrylate | 105 °C |
| isobornyl acrylate | 94 °C |
| isobornyl methacrylate | 180 °C |
| vinyl acetate | 32 °C |
| 2-hydroxyethyl acrylate | -15 °C |
| styrene | 100 °C |
| acrylic acid | 106 °C |

(continued)

| | |
|---|---|
| methacrylic acid | 228 °C |

With respect to the Tg values of homopolymers other than the examples listed above, the values given in "Polymer Handbook" (3rd edition, John Wiley & Sons, Inc., Year 1989) are used.

When no values are given in the "Polymer Handbook", values obtained by the following measurement method are used (see Japanese Patent Application Publication No. 2007-51271).

In particular, to a reaction vessel equipped with a thermometer, a stirrer, a nitrogen inlet and a condenser, are added 100 parts by weight of monomer, 0.2 part by weight of azobisisobutyronitrile, and 200 parts by weight of ethyl acetate as a polymerization solvent, and the mixture is stirred for one hour under a nitrogen gas flow. After oxygen is removed in this way from the polymerization system, the mixture is heated to 63 °C and the reaction is carried out for 10 hours. Then, it is cooled to room temperature, and a homopolymer solution having 33 % by mass solids content is obtained. Then, this homopolymer solution is applied onto a release liner by flow coating and allowed to dry to prepare a test sample (a sheet of homopolymer) of about 2 mm thickness. This test sample is cut out into a disc of 7.9 mm diameter and is placed between parallel plates; and while applying a shear strain at a frequency of 1 Hz using a rheometer (ARES, available from Rheometrics Scientific, Inc.), the viscoelasticity is measured in the shear mode over a temperature range of -70 °C to 150 °C at a heating rate of 5 °C/min; and the temperature value at the maximum of the tan $\delta$ curve is taken as the Tg of the homopolymer.

In this description, an SP value refers to a solubility parameter value determined from the basic structure of the compound by a method proposed by Fedors. In particular, from the vaporization energy $\Delta e$ (cal) of each atom or an atomic group at 25 °C as well as the molar volume $\Delta v$ (cm$^3$) of the atom or the atomic group at the same temperature, the SP value is calculated according to the next equation:

$$\text{SP value } (\delta \, (\text{cal/cm}^3)^{1/2}) = (\Sigma\Delta e/\Sigma\Delta v)^{1/2}$$

(Reference document: Hideki Yamamoto, "SP value fundamentals, application, and calculation method", 4th edition, published by Johokiko Co., Ltd., April 3, 2006, pp. 66-67).

In the present description, SP values are in "(cal/cm$^3$)$^{1/2}$" unless otherwise informed.

In this description, an aqueous solvent refers to water or a solvent mixture comprising water as the primary component (a component at a concentration exceeding 50 % by weight). The solvent constituting the solvent mixture other than water can be one, two or more species selected among various organic solvents (lower alcohols, etc.) that can be uniformly mixed with water. The water content in the aqueous solvent in this description is typically 90 % by weight or higher, or preferably 95 to 100 % by weight.

<Core-shell particle>

The water-dispersed PSA composition disclosed herein comprises an aqueous solvent, an emulsifier and polymer particles. The polymer particles comprises a core-shell particle satisfying $T_{shell} < T_{core}$. That is, at least some of the polymer particles are core-shell particles satisfying $T_{shell} < T_{core}$. With respect to a PSA formed from a PSA composition comprising such core-shell particles, shells which are softer than cores can effectively contribute to absorb impact, and thus, the PSA may exhibit excellent impact resistance. Cores which are harder than shells can effectively contribute to increase the repulsion resistance. As a result, a PSA may be obtained, combining two properties, namely impact resistance and repulsion resistance, at a high level.

Although not particularly limited, from the standpoint of adhesiveness, $T_{shell}$ is lower than -55 °C. For example, preferable core-shell particles have a $T_{shell}$ of -56 °C or lower, more preferably -60 °C or lower, or even more preferably -65 °C or lower. While the lower limit of $T_{shell}$ is not particularly limited, from the standpoint of the ease of manufacture or availability of core-shell particles, it is usually preferably -75 °C or higher. The $T_{shell}$ value can be adjusted, for instance, by modifying the composition of $P_{shell}$.

$T_{core}$ should just be higher than $T_{shell}$, and it is not particularly limited. Usually, core-shell particles have a $T_{core}$ of preferably 0 °C or higher, or more preferably 20 °C or higher. With increasing $T_{core}$, the repulsion resistance tends to increase. With increasing $T_{core}$, the core-shell structure can be better maintained in the PSA. From such standpoints, $T_{core}$ is preferably 30 °C or higher, more preferably 60 °C or higher, even more preferably 90 °C or higher, yet more preferably 120 °C or higher. Examples of a preferable embodiment of the water-dispersed PSA composition disclosed herein include an embodiment comprising core-shell particles having a $T_{core}$ of 150 °C or higher. While the upper limit of $T_{core}$ is not particularly limited, from the standpoint of the ease of manufacture or availability of core-shell particles, it is usually preferably 200 °C or lower. The $T_{core}$ value can be adjusted, for instance, by modifying the composition of $P_{core}$.

The value of $T_{core}$ minus $T_{shell}$ is preferably greater than 0 °C and can be, for instance, 10 °C or greater, preferably 30 °C or greater, or more preferably 50 °C or greater. When the value of $T_{core}$ minus $T_{shell}$ increases, the effects by the use of core-shell particles tend to be exhibited to a greater extent. For example, a PSA can be obtained, combining impact resistance and repulsion resistance at a higher level. From such standpoints, the value of $T_{core}$ minus $T_{shell}$ is advantageously 80 °C or greater, preferably 100 °C or greater, more preferably 150 °C or greater, or even more preferably 200 °C or greater. The water-dispersed PSA composition disclosed herein can be preferably made, for example, in an embodiment comprising core-shell particles having a value of 230 °C or greater for $T_{core}$ minus $T_{shell}$. The upper limit of value of $T_{core}$ minus $T_{shell}$ is not particularly limited while from the standpoint of the ease of manufacture and availability of core-shell particles, it is usually preferably 250 °C or less.

The average glass transition temperature $T_{ave}$ of all polymers $P_{all}$ contained in the core-shell particles is not particularly limited and can be, for instance, 0 °C or lower. Herein, $T_{ave}$ refers to a value determined, with respect to a monomer composition corresponding to $P_{all}$, according to the Fox equation based on the Tg values of homopolymers of the respective monomers and the weight fractions of the monomers. From the standpoint of the impact resistance, etc., $T_{ave}$ is suitably -20 °C or lower, preferably -30 °C or lower, or more preferably -40 °C or lower. While the lower limit of $T_{ave}$ is not particularly limited, from the standpoint of combining impact resistance and repulsion resistance at a high level, it is usually preferably -60 °C or higher. The value of $T_{ave}$ can be adjusted by means of $T_{core}$ and $T_{shell}$ or the $P_{shell}$ to $P_{core}$ weight ratio.

The SP value ($SP_{shell}$) of $P_{shell}$ and the SP value ($SP_{core}$) of $P_{core}$ are not particularly limited. For example, core-shell particles satisfying $SP_{core} < SP_{shell}$ can be preferably used. Such core-shell particles can be readily formed in water since shells are more hydrophilic than cores. This is preferable also from the standpoint of the ease of manufacture of core-shell particles and a water-dispersed PSA composition comprising the same. The high hydrophobicity of shells is preferable also from the standpoint of the water-dispersion stability of core-shell particles. Additionally, since the structure of the core-shell particles are stably maintained in water, the water-dispersed PSA composition is preferably less susceptible to aging deterioration during its storage.

Although not particularly limited, from the standpoint of the water-dispersion stability, etc., the value of $SP_{shell}$ is preferably 9.0 or larger, more preferably 9.5 or larger, or even more preferably 9.7 or larger. While the upper limit of $SP_{shell}$ is not particularly limited, from the standpoint of the ease of manufacture or availability of core-shell particles, it is usually preferably 12.0 or smaller, or more preferably 11.0 or smaller.

The value of $SP_{core}$ is preferably below 11.0, more preferably below 10.5, or even more preferably below 10.0. While the lower limit of $SP_{core}$ is not particularly limited, from the standpoint of the ease of manufacture or availability of core-shell particles, it is usually 8.0 or larger, typically 8.2 or larger. Core-shell particles whose $SP_{core}$ is smaller than $SP_{shell}$ are preferable.

Examples of preferable core-shell particles have a value of $SP_{core}$ minus $SP_{shell}$, for instance, in a range of -0.50 or larger, but 0.50 or smaller. In core-shell particles having $SP_{core}$ and $SP_{shell}$ values in a relatively close range as above, the binding between the core and the shell may be highly tight. A PSA comprising such core-shell particles may exhibit good cohesiveness. From such standpoints, the value of $SP_{core}$ minus $SP_{shell}$ is preferably in a range of -0.35 or larger, but 0.35 or smaller, or more preferably in a range of -0.30 or larger, but 0.30 or smaller. In view of the aforementioned ease of manufacture and water-dispersion stability, preferable core-shell particles have a value of $SP_{core}$ minus $SP_{shell}$ in a range of - 0.35 or larger, but below 0, or more preferably in a range of -0.30 or larger, but below -0.05 (e.g. above - 0.30, but below -0.05).

The core-shell particles in the art disclosed herein preferably comprise an acrylic polymer in at least one of the core and the shell. The acrylic polymer can be easily adjusted in terms of the glass transition temperature in accordance with its monomer composition. Core-shell particles comprising an acrylic polymer in at least one of the core and the shell are preferable, since at least one of $T_{shell}$, $T_{core}$ and the value of $T_{shell}$ minus $T_{core}$ can be easily adjusted. Core-shell particles comprising an acrylic polymer in each of the core and the shell are particularly preferable.

The ratio of the weight of $P_{shell}$ to the total weight of the core-shell particles is not particularly limited and can be, for instance, 50 % by weight or higher, but lower than 100 % by weight. From the standpoint of the repulsion resistance, the $P_{shell}$ content is suitably above 60 % by weight, preferably 70 % by weight or higher, more preferably above 80 % by weight, or even more preferably 82 % by weight or higher.

The ratio of the weight of $P_{core}$ to the total weight of the core-shell particles is not particularly limited and can be, for instance, above 0 % by weight, but 50 % by weight or lower. From the standpoint of the repulsion resistance, the $P_{core}$ content is suitably below 40 % by weight, preferably 30 % by weight or lower, more preferably below 20 % by weight, or even more preferably 18 % by weight or lower.

From the standpoint of combining impact resistance and repulsion resistance at a high level, the $P_{shell}/P_{core}$ weight ratio can be, for instance, 50/50 or higher, but 99/1 or lower while it is usually suitably in a range above 60/40, but equal to 98/2 or below, preferably 70/30 or higher, but 95/5 or lower, or more preferably above 80/20, but below 92/8. For example, core-shell particles having a $P_{shell}/P_{core}$ weight ratio of 82/18 or higher, but 90/10 or lower are preferable.

<Composition of shell>

As a preferable example of core-shell particles, can be cited core-shell particles in which at least $P_{shell}$ comprises an acrylic polymer. Core-shell particles having such a constitution can be advantageous in view of water-dispersion stability and ease of manufacture. Such core-shell particles are preferable since they tend to provide excellent adhesion by virtue of the properties of the acrylic polymer.

As the acrylic polymer, for example, a polymer of a monomeric starting material comprising an alkyl (meth)acrylate as a primary monomer and possibly comprising a secondary monomer copolymerizable with the primary monomer is preferable. The primary monomer herein refers to a component that accounts for higher than 50 % by weight of the monomer composition in the monomeric starting material.

As the alkyl (meth)acrylate, for instance, a compound represented by the following formula (1) can be used:

$$CH_2=C(R^1)COOR^2 \qquad (1)$$

Herein, $R^1$ in the formula (1) is a hydrogen atom or a methyl group. $R^2$ is a linear alkyl group having 1 to 20 carbon atoms (hereinafter, such a range of the number of carbon atoms may be indicated as "$C_{1-20}$"). From the standpoint of the storage elastic modulus of PSA, an alkyl (meth)acrylate with $R^2$ being a $C_{1-14}$ linear alkyl group is preferable, an alkyl (meth)acrylate with $R^2$ being a $C_{1-10}$ linear alkyl group is more preferable, and an alkyl (meth)acrylate with $R^2$ being a butyl group or a 2-ethylhexyl group is particularly preferable.

Examples of an alkyl (meth)acrylate with $R^2$ being a $C_{1-20}$ linear alkyl group include methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, pentyl (meth)acrylate, isopentyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, eicosyl (meth)acrylate, etc. Among these alkyl (meth)acrylates, can be used one species solely or a combination of two or more species. Particularly preferable alkyl (meth)acrylates include n-butyl acrylate (BA) and 2-ethylhexyl acrylate (2EHA).

The secondary monomer copolymerizable with the alkyl (meth)acrylate being the primary monomer may be useful for introducing crosslinking points in the acrylic polymer or increasing the cohesive strength of the acrylic polymer. As the secondary monomer, for instance, the following functional group-containing monomers can be used one species solely or a combination of two or more species:

Carboxyl group-containing monomers: for example, ethylenic unsaturated mono-carboxylic acids such as acrylic acid, methacrylic acid, crotonic acid, etc.; ethylenic unsaturated dicarboxylic acids such as maleic acid, itaconic acid, citraconic acid, etc., as well as anhydrides thereof (maleic aicd anhydride, itaconic acid anhydride, etc.).

Hydroxyl group-containing monomers: for example, hydroxyalkyl (meth)acrylates such as 2-hydroxyethyl (meth)acrylate, 2-hydroxypropyl (meth)acrylate, 3-hydroxypropyl (meth)acrylate, 2-hydroxybutyl (meth)acrylate, etc.; unsaturated alcohols such as vinyl alcohol, allyl alcohol, etc.

Amide group-containing monomers: for example, (meth)acrylamide, N,N-dimethyl(meth)acrylamide, N-butyl(meth)acrylamide, N-methylol(meth)acrylamide, N-methylolpropane(meth)acrylamide, N-methoxymethyl(meth)acrylamide, N-butoxymethyl(meth)acrylamide.

Amino group-containing monomers: for example, aminoethyl (meth)acrylate, N,N-dimethylaminoethyl (meth)acrylate, t-butylaminoethyl (meth)acrylate.

Epoxy group-containing monomers: for example, glycidyl (meth)acrylate, methylglycidyl (meth)acrylate, allyl glycidyl ether.

Cyano group-containing monomers: for example, acrylonitrile, methacrylonitrile.

Keto group-containing monomers: for example, diacetone (meth)acrylamide, diacetone (meth)acrylate, vinyl methyl ketone, vinyl ethyl ketone, allyl acetoacetate, vinyl acetoacetate.

Monomers having nitrogen atom-containing rings: for example, N-vinyl-2-pyrrolidone, N-methylvinylpyrrolidone, N-vinylpyridine, N-vinylpiperidone, N-vinylpyrimidine, N-vinylpiperazine, N-vinylpyrazine, N-vinylpyrrole, N-vinylimidazole, N-vinyloxazole, N-vinylmorpholine, N-vinylcaprolactam, N-(meth)acryloyl morpholine.

Alkoxysilyl group-containing monomers: for example, (3-(meth)acryloxypropyl)trimethoxysilane, (3-(meth)acryloxypropyl)triethoxysilane, (3-(meth)acryloxypropyl)methyldimethoxysilane, (3-(meth)acryloxypropyl)methyldiethoxysilane.

The amount of the secondary monomer should just be suitably selected so as to obtain desirable cohesive strength (cohesiveness) and is not particularly limited. Usually, from the standpoint of combining cohesiveness and adhesiveness in a well-balanced manner, the amount of the secondary monomer is suitably 20 % by weight or less of the monomer composition of the acrylic polymer, preferably 15 % by weight or less, or more preferably 10 % by weight or less.

For the purpose of increasing the cohesive strength of the acrylic polymer, etc., other comonomer(s) besides the aforementioned secondary monomers can be used. Examples of such co-monomers include vinyl ester-based monomers such as vinyl acetate, vinyl propionate, etc.; aromatic vinyl compounds such as styrene, substituted styrenes ($\alpha$-methylstyrene, etc.), vinyl toluene, etc.; cycloalkyl (meth)acrylates such as cyclohexyl (meth)acrylate, cyclopentyl (meth)acrylate, isobornyl (meth)acrylate, etc.; aromatic ring-containing (meth)acrylates such as aryl (meth)acrylate (e.g. phenyl (meth)acrylate), aryloxyalkyl (meth)acrylate (e.g. phenoxyethyl (meth)acrylate), arylalkyl (meth)acrylate (e.g. benzyl (meth)acrylate), etc.; olefinic monomers such as ethylene, propylene, isoprene, butadiene, isobutylene, etc.; chlorine-containing monomers such as vinyl chloride, vinylidene chloride, etc.; isocyanate group-containing monomers such as 2-(meth)acryloyloxyethyl isocyanate, etc.; alkoxy group-containing monomers such as methoxyethyl (meth)acrylate, ethoxyethyl (meth)acrylate, etc.; vinyl ether-based monomers such as methyl vinyl ether, ethyl vinyl ether, etc.; and the like. The amount of such other co-monomer(s) can be suitably selected according to the purpose and intended use, and thus is not particularly limited. For instance, it is preferable to be 10 % by weight or less of the monomer composition of the acrylic polymer.

In place of the acrylic polymer as described above or in addition to the acrylic polymer, $P_{shell}$ may comprise a non-acrylic polymer as necessary. Examples of non-acrylic polymers possibly contained in $P_{shell}$ include various polymers such as rubber-based polymers, polyester-based polymers, urethane-based polymers, polyether-based polymers, silicone-based polymers, polyamide-based polymers, fluorine-based polymers, etc., known in the PSA field. These can be used singly as one species or in combination of two or more species. Specific examples of rubber-based polymers include natural rubber, styrene-butadiene rubber (SBR), acrylonitrile-butadiene rubber (NBR), isoprene rubber, chloroprene rubber, polyisobutylene rubber, butyl rubber, reclaimed rubber, etc.

When $P_{shell}$ comprises the non-acrylic polymer in addition to an acrylic polymer, the non-acrylic polymer content is suitably 100 parts by weight or less relative to 100 parts by weight of the acrylic polymer, preferably 50 parts by weight or less, more preferably 30 parts by weight or less, or even more preferably 10 parts by weight or less. The non-acrylic polymer content can be, relative to 100 parts by weight of the acrylic polymer, 5 parts by weight or less, or 1 part by weight or less. For example, core-shell particles in which 99.5 to 100 % by weight of $P_{shell}$ is an acrylic polymer can be preferably used.

From the standpoint of the dispersion stability, etc., the monomer composition of $P_{shell}$ preferably comprises a carboxyl group-containing monomer. The carboxyl group-containing monomer content in the monomer composition of $P_{shell}$ is typically 0.5 % by weight or higher, preferably 1 % by weight or higher, more preferably 2 % by weight or higher, or even more preferably 3 % by weight or higher. While the upper limit is not particularly limited, it is usually suitably 20 % by weight or lower, preferably 15 % by weight or lower, more preferably 10 % by weight or lower, or even more preferably 5 % by weight or lower.

When a carboxyl group-containing monomer is included in the monomer composition of $P_{shell}$, the carboxyl group-containing monomer content in the monomer composition of all core-shell particles ($P_{all}$) can be, for instance, 0.2 % by weight or higher, usually preferably 0.5 % by weight or higher, more preferably 1 % by weight or higher, or even more preferably 2 % by weight or higher. While the upper limit is not particularly limited, it is usually suitably 20 % by weight or lower, preferably 15 % by weight or lower, more preferably 10 % by weight or lower, or even more preferably 5 % by weight or lower.

<Composition of core>

When $P_{core}$ comprises an acrylic polymer, as the acrylic polymer, for example, a polymer of a monomer mixture comprising a (cyclo)alkyl (meth)acrylate as the primary monomer and possibly comprising a secondary monomer copolymerizable with the primary monomer is preferable.

As the (cyclo)alkyl (meth)acrylate, for instance, a compound represented by the following formula (2) can be preferably used:

$$CH_2=C(R^3)COOR^4 \qquad (2)$$

In the formula (2), $R^3$ is a hydrogen atom or a methyl group. $R^4$ is a (cyclo)alkyl group and may typically be a $C_{1-20}$ linear alkyl group or a $C_{4-20}$ cycloalkyl group.

Examples of an alkyl (meth)acrylate with $R^4$ being a $C_{1-20}$ linear alkyl group include the same ones as the alkyl (meth)acrylate with $R^2$ being a $C_{1-20}$ linear alkyl group in the formula (1). Examples of a cycloalkyl (meth)acrylate with $R^4$ being a cycloalkyl group include cyclopentyl (meth)acrylate, cyclohexyl (meth)acrylate, isobornyl (meth)acrylate and the like. These can be used singly as one species or in a combination of two or more species.

Examples of (cyclo)alkyl (meth)acrylates preferable from the standpoint of susceptibility to formation of an acrylic polymer having the aforementioned $T_{core}$ include an alkyl (meth)acrylate with $R^4$ being a $C_{1-12}$ (e.g. $C_{1-10}$, typically $C_{1-8}$) linear alkyl group and a cycloalkyl (meth)acrylate with $R^4$ being a $C_{4-16}$ (e.g. $C_{4-12}$, typically $C_{4-40}$) cycloalkyl group. From the standpoint of the repulsion resistance, a cycloalkyl (meth)acrylate can be preferably used. A particularly preferable cycloalkyl (meth)acrylate is isobornyl (meth)acrylate.

The secondary monomer used for the acrylic polymer contained in $P_{core}$ can be suitably selected, for instance, from those exemplified as the secondary monomer that can be used for the acrylic polymer contained in $P_{shell}$. For the purpose of increasing the cohesive strength of the acrylic polymer, etc., other co-monomer(s) besides the aforementioned secondary monomers can be used. Such a comonomer can be suitably selected, for instance, from those exemplified as co-monomers that can be used for the acrylic polymer contained in $P_{shell}$.

The carboxyl group-containing monomer content in the monomer composition of $P_{core}$ is not particularly limited. For example, this content can be below 20 % by weight, preferably below 15 % by weight, more preferably below 10 % by weight, or even more preferably below 5 % by weight. Core-shell particles with this content being below 0.5 % by weight or even 0 % by weight can be preferable used. Herein, that the carboxyl group-containing monomer content is 0 % by weight means that no carboxyl group-containing monomer has been used for $P_{core}$.

In a preferable embodiment, the carboxyl group-containing monomer content in the monomer composition of $P_{core}$ is lower than that of $P_{shell}$. Such core-shell particles are preferable since they are likely to satisfy $SP_{core} < SP_{shell}$.

The $P_{core}$ of core-shell particles disclosed herein may comprise a non-acrylic polymer as necessary in place of the aforementioned acrylic polymer or in addition to the acrylic polymer. Similarly to $P_{shell}$, examples of non-acrylic polymers possibly contained in $P_{core}$ include various polymers known in the PSA field.

When $P_{core}$ comprises the non-acrylic polymer in addition to an acrylic polymer, the non-acrylic polymer content is suitably 100 parts by weight or lower relative to 100 parts by weight of the acrylic polymer, preferably 50 parts by weight or lower, more preferably 30 parts by weight or lower, or even more preferably 10 parts by weight or lower. The non-acrylic polymer content can be, relative to 100 parts by weight of the acrylic polymer, 5 parts by weight or lower, or 1 part by weight or lower. In core-shell particles according to a preferable embodiment, 99.5 to 100 % by weight of $P_{core}$ is an acrylic polymer. In another preferable embodiment, $P_{core}$ of core-shell particles is formed from a polymer other than an acrylic polymer. e.g. a rubber-based polymer.

<PSA Composition>

The water-dispersed PSA composition disclosed herein has an emulsifier content below 3.5 parts by weight relative to 100 parts by weight of polymer particles in the composition. With decreasing emulsifier content relative to polymer particles, the amount of emulsifier present at interfaces between the PSA and adherend tends to decrease. This can advantageously contribute to increase the repulsion resistance and other adhesive properties. From such standpoints, the emulsifier content relative to 100 parts by weight of polymer particles is preferably 3.0 parts by weight or lower, or more preferably 2.5 parts by weight or lower. While the lower limit of the emulsifier content is not particularly limited, from the standpoint of the likelihood for formation of a PSA composition having an average particle diameter smaller than 0.3 $\mu$m, the emulsifier content relative to 100 parts by weight of polymer particles is usually suitably 0.5 part by weight or higher, or preferably 1.0 part by weight or higher.

As the emulsifier, any one of anionic, nonionic and cationic emulsifiers can be used. These can be used singly as one species or in combination of two or more species. It is usually preferable to use an anionic or a nonionic emulsifier. Examples of anionic emulsifiers include sodium lauryl sulfate, ammonium lauryl sulfate, sodium dodecyl benzene sulfonate, sodium polyoxyethylene alkyl ether sulfate, ammonium polyoxyethylene alkyl phenyl ether sulfates, sodium polyoxyethylene alkyl phenyl ether sulfates, and the like. Examples of nonionic emulsifiers include polyoxyethylene alkyl ethers, polyoxyethylene alkyl phenyl ethers, and the like. It can be a radically polymerizing emulsifier (a reactive emulsifier) having a structure of an aforementioned anionic or nonionic emulsifier with a radically polymerizing group such as propenyl group, etc., incorporated therein. From the standpoint of the storage stability of the PSA composition, an embodiment consisting of a radically polymerizing group-free emulsifier as the emulsifier can be preferably employed.

The water-dispersed PSA composition disclosed herein preferably has an average particle diameter smaller than 0.3 $\mu$m when measured with respect to the composition. With decreasing average particle diameter of the water-dispersed PSA composition, a PSA formed from the composition tends to have a smoother surface. A PSA having a highly smooth surface generally provides tight adhesion to adherend. This can advantageously contribute to increase the repulsion resistance and other adhesive properties. From such standpoints, the water-dispersed PSA composition has an average particle diameter of preferably 0.25 $\mu$m or smaller, or more preferably 0.20 $\mu$m or smaller. While the lower limit of average particle diameter is not particularly limited, from the standpoint of the ease of manufacture and viscosity, etc., it is usually suitably 0.03 $\mu$m or larger, preferably 0.05 $\mu$m or larger, or more preferably 0.07 $\mu$m or larger. The average particle diameter being not excessively small is advantageous also from the standpoint of reducing the amount of emulsifier used.

Besides polymer particles and the emulsifier described above, the PSA composition may comprise a crosslinking agent added as necessary, selected from general crosslinking agents such as carbodiimide-based crosslinking agents, hydrazine-based crosslinking agents, epoxy-based crosslinking agents, isocyanate-based crosslinking agents, oxazoline-based crosslinking agents, aziridine-based crosslinking agents, metal chelate-based crosslinking agents, silane coupling agents and the like. Such crosslinking agents can be used singly as one species or in combination of two or more species. An example of preferable crosslinking agents is an epoxy-based crosslinking agent.

The amount of crosslinking agent used is not particularly limited and can be suitably selected so as to form a PSA exhibiting desirable properties. For example, the crosslinking agent content relative to 100 parts by weight of polymer particles can be about 0.001 to 1 part by weight. Alternatively, the PSA composition may be essentially free of a crosslinking agent.

The water-dispersed PSA composition disclosed herein may further comprise a tackifier. As the tackifier, can be used one, two or more species selected from various tackifier resins such as rosin-based resins, rosin derivative resins, petroleum-based resin, terpene-based resins, phenol-based resins, ketone-based resins, etc. Particularly preferable tackifiers include rosin-based resins and rosin derivative resins.

Examples of rosin-based resins include unmodified rosins (raw rosins) such as gum rosin, wood rosin, tall-oil rosin, etc.; modified rosins obtainable from these unmodified rosins via a modification such as hydrogenation, disproportionation, polymerization, etc. (hydrogenated rosins, disproportionated rosins, polymerized rosins, other chemically-modified rosins, etc.); and the like. Examples of rosin-derived resins include rosin esters such as unmodified rosins esterified with alcohols (i.e., esterification products of unmodified rosins) and modified rosins (hydrogenated rosins, disproportionated rosins, polymerized rosins, etc.) esterified with alcohols (i.e., esterification products of modified rosins), and the like; unsaturated fatty-acid-modified rosins obtainable from unmodified rosins and modified rosins (hydrogenated rosin, disproportionated rosin, polymerized rosin, etc.) via modifications with unsaturated fatty acids; unsaturated fatty-acid-modified rosin esters obtainable from rosin esters via modifications with unsaturated fatty acids; rosin alcohols obtainable via reduction of carboxyl groups from unmodified rosins, modified rosins (hydrogenated rosins, disproportionated rosins, polymerized rosin, etc.), unsaturated fatty-acid-modified rosins or unsaturated fatty-acid-modified rosin esters; metal salts of rosins including unmodified rosins, modified rosins, various rosin derivatives, etc. (in particular, metal salts of rosin esters); rosin phenol resins obtainable from rosins (unmodified rosins, modified rosins, various rosin derivatives, etc.) via addition of phenol in the presence of an acid catalyst followed by thermal polymerization; and so on.

When a tackifier is used, its amount used is not particularly limited. For example, relative to 100 parts by weight of polymer particles, it can be 1 part by weight or more, or from the standpoint of obtaining better effects by the tackifier, it is preferably 5 parts by weight or more, or more preferably 10 parts by weight or more. From the standpoint of suppressing influences on the repulsion resistance or properties at lower temperatures, the amount of tackifier used relative to 100 parts by weight of polymer particles is suitably 40 parts by weight or less, usually preferably 30 parts by weight or less, or more preferably 25 parts by weight or less.

The PSA composition disclosed herein may contain an acid or a base (ammonia water, etc.) used for pH adjustment and so on. Examples of other optional components that can be contained in the composition include various additives generally used in the field of water-dispersed PSA compositions, such as viscosity-adjusting agents such as thickner, leveling agents, plasticizers, fillers, colorants including pigments and dyes, etc., stabilizing agents, preservatives, anti-aging agents, and so on. With respect to various additives, those heretofore known can be used according to typical methods. Since these do not particularly characterize the present invention, detailed descriptions are omitted.

<Production method>

In the method disclosed herein for producing a water-dispersed PSA composition, to a first dispersion comprising seed particles obtainable by polymerizing a first monomeric starting material, a second monomeric starting material is supplied. The second monomeric starting material is supplied to the first dispersion typically in a form of a monomer mixture essentially free of an emulsifier. The second monomeric starting material is polymerized in the presence of the seed particles to obtain a second dispersion. The emulsifier content in the second dispersion is preferably less than 3.5 parts by weight relative to 100 parts by weight of the polymer particles. The average particle diameter measured with respect to the second dispersion is preferably smaller than 0.3 $\mu$m.

Herein, that the monomer mixture is essentially free of an emulsifier typically means that the emulsifier content in the monomer mixture is 0 to 0.05 % by weight (more preferably 0 to 0.01 % by weight). That the emulsifier content in the monomer mixture is 0 % by weight means that no emulsifier is used when preparing the monomer mixture. A monomer mixture referred to herein may have a composition consisting of one species of monomer.

According to a water-dispersed PSA composition obtained by such a method, a PSA may be formed, combining impact resistance and repulsion resistance at a high level. For example, as compared to a method where a monomer emulsion obtained by emulsifying the second monomeric starting material with an emulsifier and water is supplied to the first dispersion to carry out polymerization, a water-dispersed PSA composition capable of forming a higher performance PSA can be produced.

When implementing the production method disclosed herein, it is unnecessary to reveal how the aforementioned effects are obtained by applying this production method, yet the following can be considered. Specifically, in the production method disclosed herein, the second monomeric starting material is supplied to the first dispersion in a form of a monomer mixture essentially free of an emulsifier. By this means, while reducing the amount of emulsifier per unit weight of polymer particles, it is possible to prepare a second dispersion having a small average particle diameter. Reducing the emulsifier amount per unit weight of polymer particles can contribute to increase the repulsion resistance by means of reducing the amount of emulsifier present at interfaces between the PSA and adherend. Having a small average particle diameter can also contribute to increase the repulsion resistance by means of increasing the tightness of adhesion to adherend. The combined effects by a reduction in the amount of emulsifier and a decrease in the average particle diameter are considered to effectively improve the repulsion resistance. Since the second monomeric starting material is supplied in a form of a monomer mixture essentially free of an emulsifier to the first dispersion, no emulsifier is added to the reaction system along with the second monomeric starting material. Thus, new polymer particles different from seed particles are unlikely to form in the second step and thus, the second monomeric starting material is likely to transfer to seed particles. This is considered to allow for efficient formation of a polymer particle comprising the polymer of the second monomeric starting material as well as a seed particle (i.e. the polymer of the first monomeric starting material) within the same particle.

The second dispersion in the production method disclosed herein preferably comprises a polymer particle containing the polymer of the second monomeric starting material and the polymer of the first monomeric starting material within the same particle as described above. The polymer particle preferably has a structure where the polymer of the second monomeric starting material is formed on a seed particle (on the outer surface) although not limited to this. For example, it may be a polymer particle in which the second monomeric starting material is polymerized inside the seed particle (typically at the core). Where the polymers of the first monomeric starting material and the second monomer are located in a polymer particle can be adjusted, for instance, by means of the relative magnitudes of the SP values of these polymers.

The production method disclosed herein can be preferably practiced in an embodiment where the polymer constituting seed particles has an SP value (SP1) and the polymer of the second monomeric starting material has an SP value (SP2) while satisfying a relationship SP1 < SP2. According to such an embodiment, in the second step, the polymer of the second monomeric starting material is likely to form on seed particles. Thus, a core-shell particle is likely to form, having a core originating from a seed particle and a shell derived from the second monomeric starting material. This is preferable from the standpoint of the quality stability of the resulting water-dispersed PSA composition or the performance and its stability of a PSA formed from the PSA composition, etc.

In the production method disclosed herein, at least one of the first monomeric starting material and the second monomeric starting material comprises an acrylic monomer. The production method can be preferably practiced, for instance, in an embodiment using a seed particle comprising an acrylic polymer and a second monomeric starting material comprising an acrylic monomer. Another preferable embodiment uses a seed particle formed from a non-acrylic polymer (e.g. a synthetic rubber-based latex particle) and a second monomeric starting material comprising an acrylic monomer.

The production method of the present invention is described more in detail below with an example of an embodiment using a seed particle comprising an acrylic polymer and a second monomeric starting material comprising an acrylic monomer while the scope of the present invention is not to be limited.

<First Step>

In the first step, a first dispersion is obtained, comprising seed particles obtainable by polymerizing a first monomeric starting material, an emulsifier and an aqueous solvent. A preferable composition of the first monomeric starting material may be the same as a preferable monomer composition of $P_{core}$ described earlier. By polymerizing the first monomeric starting material having such a composition, the first dispersion comprising seed particles can be preferably prepared. The method for polymerizing the first monomeric starting material is not particularly limited and a known or commonly-used polymerization method can be employed. Emulsion polymerization is particularly preferable. In a preferable embodiment, a monomer emulsion is subjected to emulsion polymerization to form the seed particles, with the monomer emulsion being obtainable by emulsifying a mixture of a first monomeric starting material, an emulsifier and an aqueous solvent (typically water). For emulsification of the mixture, a known or commonly-used mixer can be used.

The method for supplying the monomer emulsion to a reaction vessel is not particularly limited. For instance, can be suitably employed an all-at-once supply method, gradual supply method, portionwise supply method, etc. For the all-at-once method, a monomer emulsion prepared in advance may be entirely added to a reaction vessel all at once, or the entire portion of the monomer emulsion may be prepared within the reaction vessel.

As the emulsifier used in the first step, for instance, those exemplified as the emulsifier contained in the PSA composition can be used without particular limitations. Usually, the use of an anionic or nonionic emulsifier is preferable. Alternatively, a radically polymerizing emulsifier (a reactive emulsifier) having a structure of an anionic or nonionic emulsifier with a radically polymerizing group such as propenyl group, etc., incorporated therein can be used as well. From the standpoint of polymerization stability, an embodiment where a radically polymerizing group-free emulsifier is used solely can be preferably employed.

The emulsifier used in the first step can be entirely included in the monomer emulsion. Alternatively, part of the emulsifier can be placed in a reaction vessel and an monomer emulsion prepared with the remaining emulsifier may be supplied to the reaction vessel. From the standpoint of suppressing production of new polymer particles in the second step, upon completion of supplying the first monomeric starting material to the reaction vessel, it is preferable that the total amount of the emulsifier has been supplied to the reaction vessel.

The weight ratio of the emulsifier used in the first step to the first monomeric starting material is not particularly limited. From the standpoint of the polymerization stability in the second step, for example, the amount of emulsifier used in the first step can be 5 parts by weight or more, or preferably 8 parts by weight or more, relative to 100 parts by weight of the first monomeric starting material. From the standpoint of reducing the amount of emulsifier relative to 100 parts by weight of polymer particles contained in the second dispersion, usually, the amount of emulsifier used in the first step is suitably 25 parts by weight or less, preferably 20 parts by weight or less, or more preferably 15 parts by weight or less, relative to 100 parts by weight of the first monomeric starting material.

According to such emulsion polymerization, the first dispersion can be obtained as a polymerization reaction mixture comprising seed particles (acrylic polymer) as a polymer of the first monomeric starting material, an emulsifier and an aqueous solvent. The first dispersion can be preferably used in the subsequent second step.

The amount of emulsifier contained in the first dispersion is preferably less than 3.5 parts by weight (preferably 0.5 to 3.0 parts by weight) relative to 100 parts by weight of the first monomeric starting material and the second monomeric starting material combined. Of the total amount of emulsifier contained in the second dispersion, it is preferable that 90 to 100 % by weight (more preferably 95 to 100 % by weight) is contained in the first dispersion.

As the first dispersion in the production method disclosed herein, can be used a dispersion comprising seed particles polymerized in advance, an emulsifier and an aqueous solvent. For example, rubber-based latexes such as rubber-based latex, synthetic rubber-based latex, etc., can be used as the first dispersion.

<Second Step>

In the second step, the second monomeric starting material is added to the first dispersion to carry out polymerization. A preferable composition of the second monomeric starting material may be the same as a preferable monomer compositions of $P_{shell}$ described earlier. The second monomeric starting material may be added to the first dispersion, in a form of a monomer mixture essentially free of an emulsifier. Preferable emulsifier contents in the monomer mixture are as described above and thus they are not repeated here. The second monomeric starting material is added to the first dispersion, typically in a form of a monomer mixture that has not been emulsified (i.e. non-emulsified). The monomer mixture is preferably free of water.

As the method for supplying the second monomeric starting material to the first dispersion, an all-at-once method, gradual supply method, portionwise supply method, etc., can be suitably employed. From the standpoint of the polymerization stability, a gradual supply method or a portionwise supply method is preferable among which the gradual supply method is more preferable.

In the combined weight $M_{all}$ of the weight M1 of the first monomeric starting material and the weight M2 of the second monomeric starting material, the weight proportion of M1 is not particularly limited and can be, for instance, higher than 0 % by weight, but 50 % by weight or lower. From the standpoint of the repulsion resistance, $M1/M_{all}$ is suitably lower than 40 % by weight, preferably 30 % by weight or lower, more preferably lower than 20 % by weight, or even more preferably 18 % by weight or lower.

The weight proportion of M2 in $M_{all}$ is not particularly limited and can be, for instance, 50 % by weight or higher, but lower than 100 % by weight. From the standpoint of the impact resistance, $M2/M_{all}$ is suitably higher than 60 % by weight, preferably 70 % by weight or higher, more preferably higher than 80 % by weight, or even more preferably 82 % by weight or higher.

Usually, the values of $M1/M_{all}$ and $M2/M_{all}$ approximately correspond to the proportions of M1 and M2 in the weight of polymer particles.

From the standpoint of combining impact resistance and repulsion resistance at a high level, M2/M1 can be, for instance, 50/50 or higher, but 99/1 or lower, usually suitably in a range above 60/40, but equal to or below 98/2, preferably 70/30 or higher, but 95/5 or lower, or more preferably above 80/20, but below 92/8. For example, M2/M1 is preferably in a range of 82/18 or higher, but 90/10 or lower.

From the standpoint of the repulsion resistance of the PSA, the emulsifier content in the second dispersion is preferably 3.0 parts by weight or less, or more preferably 2.5 parts by weight or less, relative to 100 parts by weight of polymer particles. While the lower limit of emulsifier content is not particularly limited, usually, it is suitably 0.5 part by weight or higher relative to 100 parts by weight of polymer particles, or preferably 1.0 part by weight or higher. It is preferable to implement the second step so as to obtain a second dispersion having such an amount of emulsifier.

From the standpoint of the repulsion resistance of the PSA, the second dispersion has an average particle diameter of preferably 0.25 $\mu$m or smaller, or more preferably 0.20 $\mu$m or smaller. While the lower limit of average particle diameter is not particularly limited, from the standpoint of the ease of manufacture and viscosity, etc., it is usually suitably 0.03 $\mu$m or larger, preferably 0.05 $\mu$m or larger, or more preferably 0.07 $\mu$m or larger. The average particle diameter being not excessively small is advantageous also from the standpoint of reducing the amount of emulsifier used. It is preferable to implement the second step so as to obtain a second dispersion having such an average particle diameter.

<Polymerization Initiator>

For the polymerization in the first step or the second step, according to the polymerization method type, etc., a known or commonly-used polymerization initiator can be suitably selected and used. For example, in emulsion polymerization, an azo-based polymerization initiator can be preferably used. Specific examples of azo-based polymerization initiators include 2,2'-azobisisobutyronitrile (AIBN), 2,2'-azobis(2-methylpropionamidine) disulfate, 2,2'-azobis(2-amidinopropane) dihydrochloride, 2,2'-azobis[2-(5-methyl-2-imidazolin-2-yl)propane] dihydrochloride, 2,2'-azobis(N,N'-dimethyleneisobutylamidine), 2,2'-azobis[N-(2-carboxyethyl)-2-methylpropionamidine] hydrate, 2,2'-azobis(4-methoxy-2,4-dimethylvaleronitrile), 2,2'-azobis(2,4-dimethylvaleronitrile), 2,2'-azobis(2-methylbutyronitrile), 1,1'-azobis(cyclohexane-1-carbonitrile), 2,2'-azobis(2,4,4-trimethylpentane), dimethyl-2,2'-azobis(2-methylpropionate), and the like.

Other examples of polymerization initiators include persulfate salts such as potassium persulfate (KPS), ammonium persulfate (APS), etc.; peroxide-based initiators such as benzoyl peroxide, t-butyl hydroperoxide, di-t-butyl peroxide, t-butyl peroxybenzoate, dicumyl peroxide, 1,1-bis(t-butylperoxy)-3,3,5-trimethylcyclohexane, 1,1-bis(t-butylperoxy)cyclododecane, hydrogen peroxide, etc.; substituted-ethane-based initiators such as phenyl-substituted ethane, etc.; carbonyl-based initiators such as aromatic carbonyl compounds; and so on. Yet other examples of polymerization initiators include a redox-based initiator by combination of a peroxide and a reducing agent. Examples of such a redox-based initiator include combination of a peroxide (hydrogen peroxide water, etc.) and ascorbic acid, combination of a persulfate salt and sodium hydrogen sulfite, and the like. These polymerization initiators can be used singly as one species or in combination of two or more species.

The amount of polymerization initiator used is not particularly limited. For example, in the polymerization of the first step, the amount of polymerization initiator used relative to 100 parts by weight of the first monomeric starting material can be selected from a range of suitably about 0.005 to 1 part by weight, or preferably about 0.01 to 1 part by weight. In the polymerization of the second step, the amount of polymerization initiator used relative to 100 parts by weight of the second monomeric starting material can be selected from a range of typically about 0.005 to 1 part by weight, or preferably about 0.01 to 1 part by weight.

The polymerization temperature can be suitably selected according to the types of monomers and the type of polymerization initiator used, etc. Usually, the polymerization temperature is suitably about 20 °C to 100 °C, or preferably about 40 °C to 80 °C. The method for supplying the polymerization initiator to a reaction vessel is not particularly limited. For instance, an all-at-once method, gradual supply method, portionwise supply method, etc., can be suitably employed.

<Chain Transfer Agent>

For the polymerization, as necessary, various heretofore known chain transfer agents (which can be considered also as a molecular weight-adjusting agent or polymerization degree-adjusting agent) can be used. The chain transfer agent can be one, two or more species selected from mercaptans such as n-lauryl mercaptan, t-lauryl mercaptan, glycidyl mercaptan, 2-mercaptoethanol, etc. Particularly preferable chain transfer agents include n-lauryl mercaptan and t-lauryl mercaptan.

Such chain transfer agent may be used in one of the first step and the second step, or in each step. When a chain transfer agent is used, usually, it is preferable to use the chain transfer agent for the polymerization of the second step. The use of a chain transfer agent in the second step may improve, for instance, the impact resistance of the PSA. While the amount of chain transfer agent used is not particularly limited, for instance, relative to 100 parts by weight of the second monomeric starting material, it can be about 0.001 to 0.5 part by weight or it is usually preferably 0.01 to 0.1 part by weight. From the standpoint of the repulsion resistance, it is advantageous to not use a chain transfer agent in the polymerization of the first step.

The production method disclosed herein can be preferably employed as a method for producing a water-dispersed PSA composition described above. As the water-dispersed PSA composition, the second dispersion obtained in the second step can be used as is, or the second dispersion supplemented as necessary with a crosslinking agent, a tackifier, and an acid or base for pH adjustment as described earlier as well as various other additives generally used in the field of water-dispersed PSA compositions can be used as well.

<PSA Sheet>

This description provides a PSA sheet comprising a PSA layer formed from a water-dispersed PSA composition disclosed herein. It may be an on-substrate PSA sheet having such a PSA layer on one or each face of a substrate (support), or a substrate-free PSA sheet having the PSA layer retained on a release liner (which can be considered as a substrate having a release surface). The concept of the PSA sheet referred to here encompasses those called as PSA tapes, PSA labels, PSA films, and so on. Although the PSA layer is typically formed in a continuous manner, it is not limited to such a form and it can be formed into, for example, a regular or random pattern of dots, stripes, and so on. The PSA sheet provided by the present invention may be in a roll or in a flat sheet. Alternatively, the PSA sheet can be processed into various other forms.

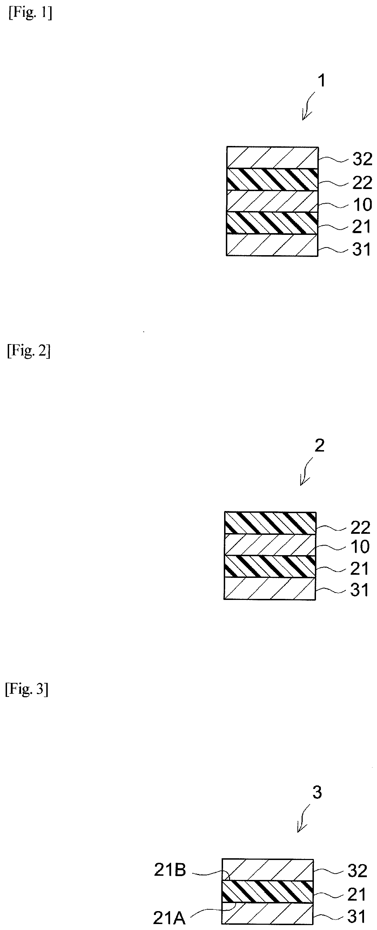

The PSA disclosed herein may have, for example, cross-sectional constitutions schematically illustrated in Fig. 1 to Fig. 6. Among these, Fig. 1 and Fig. 2 show examples of constitutions of an adhesively double-faced on-substrate PSA sheet. Double-faced PSA sheet 1 illustrated in Fig. 1 has a constitution in which PSA layers 21 and 22 are provided, respectively, on two faces (both non-releasable) of a substrate 10 and the PSA layers 21 and 22 are protected, respectively, with release liners 31 and 32. Double-faced PSA sheet 2 illustrated in Fig. 2 has a constitution in which PSA layers 21 and 22 are provided, respectively, on two faces (both non-releasable) of a substrate 10 and PSA layer 21 as one of the two is protected with a release liner 31 having a release surface on each face. This type of PSA sheet 2 can be configured so that PSA layer 22 is also protected with release liner 31 by winding the PSA sheet to allow the other PSA layer 22 to contact the back face of release liner 31.

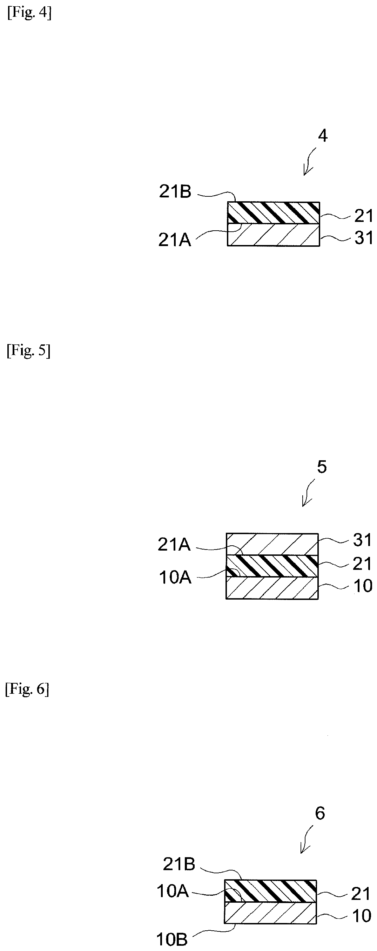

Fig. 3 and Fig. 4 show examples of constitution of a substrate-free double-faced PSA sheet. PSA sheet 3 illustrated in Fig. 3 has a constitution in which two faces 21A and 21B of a substrate-free PSA layer 21 are protected, respectively, with release liners 31 and 32 each having a release surface at least on the PSA layer side. PSA sheet 4 illustrated in Fig. 4 has a constitution such that one surface (adhesive face) 21A of a substrate-free PSA layer 21 is protected with a release liner 31 having a release surface on each face; and when this is wound, the other surface (adhesive face) 21B of PSA layer 21 contacts the back face of release liner 31 so that the other surface 21B is also protected with release liner 31.

Fig. 5 and Fig. 6 show examples of constitutions of an adhesively single-faced on-substrate PSA sheet. PSA sheet 5 illustrated in Fig. 5 has a constitution in which a PSA layer 21 is provided on a surface 10A (non-releasable) of a substrate 10 and a surface (adhesive face) 21A of the PSA layer 21 is protected with a release liner 31 having a release surface at least on the PSA layer side. PSA sheet 6 illustrated in Fig. 6 has a constitution in which a PSA layer 21 is provided on a face 10A (non-releasable) of a substrate 10. The other face 10B of substrate 10 is a release surface and when PSA sheet 6 is wound, the other face 10B contacts PSA layer 21 so that the face (adhesive face) 21B of the PSA layer is protected with the other face 10B of the substrate.

In a single-faced or double-faced on-substrate PSA sheet, as the substrate to support (back) the PSA layer(s), resin film, paper, fabrics, rubber sheets, foam sheets, metal foil and a composite of these can be used. Examples of resin film include polyolefin film such as polyethylene (PE), polypropylene (PP), ethylene-propylene copolymers, etc.; polyester film such as polyethylene terephthalate (PET), etc.; vinyl chloride resin film; vinyl acetate resin film; polyimide resin film; polyamide resin film; fluorine resin film; cellophane and the like. Examples of paper include Japanese paper, Kraft paper, glassine paper, high-grade paper, synthetic paper, top-coated paper and the like. Examples of fabrics include woven fabric and non-woven fabric of pure or blended yarn of various fibrous materials, etc. Examples of the fibrous materials include cotton, staple cloth, Manila hemp, pulp, rayon, acetate fiber, polyester fiber, polyvinyl alcohol fiber, polyamide fiber, polyolefin fiber, etc. Examples of rubber sheets include natural rubber sheets, butyl rubber sheets, etc. Examples of foam sheets include polyurethane foam sheets, polychloroprene rubber foam sheets, etc. Examples of metal foil include aluminum foil, copper foil, etc.

The concept of non-woven fabric as used herein primarily refers to non-woven fabric for PSA sheets used in the field of PSA tapes and other PSA sheets, typically referring to non-woven fabric (or so-called "paper") fabricated using a general paper machine. Resin film herein is typically a non-porous resin sheet and its concept is distinct from, for instance, non-woven fabric (i.e. excludes non-woven fabric). The resin film may be any of non-stretched film, uni-axially stretched film and bi-axially stretched film. The substrate's surface to be provided with a PSA layer may be subjected to a surface treatment such as primer coating, corona discharge treatment, plasma treatment, etc.

While the thickness of the substrate is not particularly limited and can be suitably selected according to the purpose, it is generally 10 $\mu$m to 500 $\mu$m or preferably 10 $\mu$m to 200 $\mu$m. From the standpoint of the repulsion resistance, for instance, a substrate having a thickness of 10 $\mu$m to 50 $\mu$m can be preferably used.

The thickness of the PSA layer is not particularly limited and can be suitably selected according to the purpose. Usually, the thickness of the PSA layer is suitably about 5 $\mu$m to 200 $\mu$m or preferably about 10 $\mu$m to 150 $\mu$m. From the standpoint of combining impact resistance and repulsion resistance at a higher level, the thickness of the PSA layer

is preferably 15 μm to 100 μm or more preferably 20 μm to 80 μm.

The method for providing a PSA layer to a face of substrate is not particularly limited and a known or commonly-used method can be employed. For example, can be suitably employed a method (direct method) where a PSA composition is directly applied to a substrate and allowed to dry; or a method (transfer method) where the PSA composition is applied to a releasable surface and allowed to dry to form a PSA layer on the surface, and the PSA layer is then adhered and transferred to a substrate, etc. The PSA composition can be applied, for instance, with a known or commonly used coater such as gravure roll coater, reverse roll coater, kiss roll coater, dip roll coater, bar coater, knife coater, spray coater, or the like.

As the release liner, any conventional release paper or the like can be used without any particular limitations. For example, can be used a release liner having a release layer on a surface of a substrate such as plastic film or paper, etc.; a release liner formed from a poorly-adhesive material such as a fluorine-based polymer (polytetrafluoroethylene, etc.) or a polyolefin-based resin (polyethylene, polypropylene, etc.); or the like. The release layer can be formed, for instance, by subjecting the substrate to a surface treatment with a release agent such as a silicone-based, a long-chain alkyl-based, a fluorine-based, a molybdenum disulfide-based release agent or the like.

<Gel Fraction>

Although not particularly limited, a PSA formed from the water-dispersed PSA composition disclosed herein can have a gel fraction by weight of, for instance, 20 % or higher; and it is usually suitably 30 % or higher, or preferably 40 % or higher. With increasing gel fraction of the PSA, the repulsion resistance tends to increase. From such a standpoint, the gel fraction of the PSA is preferably 50 % or higher, more preferably 60 % or higher, even more preferably 70 % or higher, or particularly preferably 75 % or higher. While the upper limit of gel fraction is not particularly limited, it is usually 95 % or lower, or typically 90 % or lower. The gel fraction can be adjusted, for example, by the use or absence of crosslinking agent, the type and amount of crosslinking agent, the use or absence of chain transfer agent, the type and amount of chain transfer agent, etc.

Herein, the term "gel fraction of a PSA" refers to a value measured by the following method. The gel fraction can be understood as a weight proportion of the ethyl acetate-insoluble portion in the PSA.

[Gel fraction measurement method]

Approximately 0.1 g of a PSA sample (weight: Wg1) is wrapped into a pouch with a porous polytetrafluoroethylene membrane (weight: Wg2) having an average pore diameter of 0.2 μm, and the opening is tied with twine (weight: Wg3). This package is immersed in 50 mL of ethyl acetate and stored at room temperature (typically 23 °C) for 7 days to extract only the sol fraction in the PSA from the membrane. After this, the package is taken out, and any residual ethyl acetate is wiped off the outer surface. The package is then dried at 130 °C for 2 hours and the package weight (Wg4) is measured. The gel fraction of the PSA is determined by substituting the respective values into the following equation:

$$\text{Gel Fraction (\%)} = [(Wg4\text{-}Wg2\text{-}Wg3)/Wg1] \times 100$$

As the porous polytetrafluoroethylene (PTFE) membrane, it is desirable to use trade name "NITOFURON® NTF1122" (0.2 μm average pore diameter, 75 % porosity, 85 μm thick) available from Nitto Denko Corporation or a similar product.

The PSA sheet disclosed herein may exhibit impact resistance such that in an impact resistance test performed by a method described later in the worked examples, the number of dropping rounds executed until an acrylic plate falls off a polycarbonate plate in a drop test at room temperature is 10 or over. In the impact resistance test, it is more preferable that no fall-off occurs even after 18 dropping rounds at room temperature. It is more preferable that when dropped again at -5 °C after 18 dropping rounds at room temperature, the number of dropping rounds until a fall-off occurs is 5 or over.

The PSA sheet disclosed herein may exhibit repulsion resistance such that in a repulsion resistance test performed by a method described later in the worked examples, the floating distance after 24 hours at 23 °C is 2.0 mm or smaller. The floating distance in the repulsion resistance test is preferably 1.5 mm or smaller, or more preferably 1.0 mm or smaller.

The intended use of the PSA sheet disclosed herein is not particularly limited. For example, by taking advantage of its high repulsion resistance, it can be used for joining or fastening of various components. Additionally, by taking advantage of its high impact resistance, it can be preferably used for joining display panels and cases in mobile electric devices, for instance, mobile electric devices (e.g. mobile phones, smartphones, etc.) installed with liquid crystal displays.

EXAMPLES

Several worked examples relating to the present invention are described below, but the present invention is not intended to be limited to these examples. In the description below, "parts" and "%" are based on the mass unless otherwise specified.

<Example 1>

(First Step: preparation of first dispersion)

To a reaction vessel equipped with a condenser, nitrogen inlet, thermometer and stirrer, was placed a monomer emulsion consisting of 48.7 parts of isobornyl methacrylate (IBXMA) as the first monomeric starting material (core-forming monomer), 336.7 parts of ion-exchanged water and 23.9 parts of an emulsifier with 24 % active ingredient (i.e., 5.74 parts active ingredient). The monomer emulsion resulted from emulsification of the first monomeric starting material and was prepared by placing the respective materials in a container and mixing them at 6000 rpm for five minutes using a homomixer (a product of Tokushu Kika Kogyo Co., Ltd.). As the emulsifier, was used trade name "EMALAD-25R" (active ingredient: ammonium lauryl sulfate) available from Kao Corporation. Hereinafter, the emulsifier may be abbreviated to "AD-25R".

The monomer emulsion in the reaction vessel was stirred under nitrogen gas flow at 60 °C for over one hour. To the reaction vessel, was placed 0.49 part of an initiator adjusted with ion-exchanged water to a 10 % concentration (i.e. 0.049 part active ingredient). The reaction was carried out for two hours while keeping the system at 60 °C. As the initiator, was used 2.2'-azobis[N-(2-carboxyethyl)-2-methylpropionamidine] hydrate (available from Wako Pure Chemical Industries, Ltd., trade name "VA-057"). Hereinafter, the initiator may be abbreviated to "VA-057".

(Second step: preparation of second dispersion)

While still keeping the system at 60 °C, was added 2.4 parts of initiator (VA-057) adjusted with ion-exchanged water to a 10 % concentration. Subsequently, was gradually added dropwise over 3.5 hours a monomer mixture (liquid mixture) prepared by mixing 229.2 parts of 2-ethylhexyl acrylate (2EHA) and 8.6 parts of acrylic acid (AA) as the second monomeric starting material (shell-forming monomers). After completion of the dropwise addition, the system was kept at 60 °C for three more hours.

(Preparation of PSA Composition)

The resulting polymerization reaction mixture (second dispersion) was cooled to room temperature and 10 % ammonia water was added to pH 7. To 100 parts of polymer particles contained in the polymerization reaction mixture, was further added 0.01 part of an epoxy-based crosslinking agent to prepare a PSA composition according to this example. As the epoxy-based crosslinking agent, was used trade name "TETRAD C" available from Mitsubishi Gas Chemical Inc. Hereinafter, the crosslinking agent may be indicated simply as "TETRAD C".

<Example 2>

In the first step of Example 1, in place of the monomer emulsion of Example 1, was used a monomer emulsion consisting of 4.9 parts of 2EHA and 43.8 parts of IBXMA as the first monomeric starting material, 336.7 parts of ion-exchanged water and 23.9 parts of emulsifier (AD-25R) with 24 % active ingredient. In this example, no crosslinking agent was added to the polymerization reaction mixture. Otherwise, in the same manner as Example 1, a PSA composition according to this example was prepared.

<Example 3>

In the first step of Example 1, in place of the monomer emulsion of Example 1, was used a monomer emulsion consisting of 19.5 parts of 2EHA and 29.2 parts of IBXMA as the first monomeric starting material, 336.7 parts of ion-exchanged water and 23.9 parts of emulsifier (AD-25R) with 24 % active ingredient. In this example, no crosslinking agent was added to the polymerization reaction mixture. Otherwise, in the same manner as Example 1, a PSA composition according to this example was prepared.

<Example 4>

In the second step of Example 1, in place of the monomer mixture of Example 1, was used a monomer mixture prepared by mixing 229.09 parts of 2EHA and 8.56 parts of AA as the second monomeric starting material and 0.14 part of t-lauryl mercaptan (available from Wako Pure Chemical Industries, Ltd.) as the chain transfer agent. Otherwise, in the same manner as Example 1, a PSA composition according to this example was prepared.

<Example 5>

In the first step of Example 1, in place of the monomer emulsion of Example 1, was used a monomer emulsion consisting of 4.9 parts of 2EHA and 43.8 parts of IBXMA as the first monomeric starting material, 336.7 parts of ion-exchanged water and 23.9 parts of emulsifier (AD-25R) with 24 % active ingredient. In the second step of Example 1, in place of the monomer mixture of Example 1, was used a monomer mixture prepared by mixing 229.09 parts of 2EHA and 8.56 parts of AA as the second monomeric starting material and 0.14 part of t-lauryl mercaptan (available from Wako Pure Chemical Industries, Ltd.) as the chain transfer agent. Otherwise, in the same manner as Example 1, a PSA composition according to this example was prepared.
Transmission electron microscope (TEM) observations confirmed that all the PSA compositions obtained in Example 1 to Example 5 contained core-shell polymer particles. The TEM observations were carried out by applying the PSA composition according to each example so as to obtain a thickness of 40 $\mu$m after dried and allowing the applied composition to dry at 100 °C for three minutes to form a PSA layer followed by staining the PSA layer with ruthenium tetroxide. For the TEM, model "H-7654" available from Hitachi, Ltd., was used and the analysis was carried out at an accelerating voltage of 100 kV.

<Comparative Example 6>

In the first step of Example 1, in place of the monomer emulsion of Example 1, was used a first monomer emulsion consisting of 48.7 parts of IBXMA, 57.3 parts of ion-exchanged water and 4.1 parts of emulsifier (AD-25R) with 24 % active ingredient. In the second step of Example 1, in place of the monomer mixture of Example 1, was used a second monomer emulsion prepared by emulsifying, similarly to the first monomeric starting material of Example 1, a mixture consisting of 229.2 parts of 2EHA, 8.6 parts of AA, 279.5 parts of ion-exchanged water and 19.8 parts of emulsifier (AD-25R) with 24 % active ingredient. Otherwise, in the same manner as Example 1, a PSA composition according to this example was prepared.

<Comparative Example 7>

In the first step of Example 1, in place of the monomer emulsion of Example 1, was used a first monomer emulsion consisting of 47.8 parts of IBXMA, 39.2 parts of ion-exchanged water and 27.9 parts of emulsifier (AD-25R) with 24 % active ingredient. In the second step of Example 1, in place of the monomer mixture of Example 1, was used a second monomer emulsion prepared by emulsifying, similarly to the first monomeric starting material of Example 1, a mixture consisting of 224.7 parts of 2EHA, 8.4 parts of AA, 279.9 parts of ion-exchanged water and 19.4 parts of emulsifier (AD-25R) with 24 % active ingredient. Otherwise, in the same manner as Example 1, a PSA composition according to this example was prepared.

<Comparative Example 8>

Were mixed 80 parts of n-butyl acrylate (BA), 900 parts of methyl methacrylate (MMA) and 20 parts of AA to obtain a monomer mixture. To 600 parts of the monomer mixture, were added 24 parts of an anionic reactive surfactant (available from Dai-ichi Kogyo Seiyaku Co., Ltd., trade name "AQUALON HS-10"; active ingredient: polyoxyethylene nonyl propenylphenyl ether ammonium sulfate) and 382 parts of ion-exchanged water. The mixture was mixed at 6000 rpm for five minutes using a homomixer (a product of Tokushu Kika Kogyo Co., Ltd.) to prepare a first monomer emulsion.
On the other hand, were mixed 949.5 parts of BA, 50 parts of AA and 0.5 part of 3-methacryloxypropyltrimethoxysilane (available from Shin-Etsu Chemical Co., Ltd., trade name "KBM-503") to obtain a monomer mixture. To 600 parts of the monomer mixture, were added 24 parts of an anionic reactive surfactant (available from Dai-ichi Kogyo Seiyaku Co., Ltd., trade name "AQUALON HS-10"; active ingredient: polyoxyethylene nonyl propenylphenyl ether ammonium sulfate) and 382 parts of ion-exchanged water. The mixture was mixed at 6000 rpm for five minutes using a homomixer (a product of Tokushu Kika Kogyo Co., Ltd.) to prepare a second monomer emulsion.
To a reaction vessel equipped with a condenser, nitrogen inlet, thermometer, dropping funnel and stirrer, were placed 200 parts of the first monomer emulsion prepared above and 330 parts of ion-exchanged water. The resultant was stirred under nitrogen gas flow at 60 °C for over one hour. To this reaction vessel, 0.6 part of ammonium persulfate (APS) was added and the reaction was carried out for one hour while keeping the system at 60 °C.

Subsequently, while still keeping the reaction vessel at 60 °C, was added dropwise 800 parts of the second monomer emulsion prepared above over three hours. After completion of the dropwise addition, the system was kept at 60 °C for three more hours to obtain a polymerization reaction mixture with 46.2 % non-volatile content. After the polymerization reaction mixture was cooled to room temperature, 30 parts of 10 % ammonia water was added to pH 7 and 45.4 % non-volatile content. To 100 parts of polymer particles contained in the polymerization reaction mixture, was further added 0.01 part of epoxy-based crosslinking agent (TETRAD C) to prepare a PSA composition according to this example.

<Comparative Example 9: one-step polymerization>

To a reaction vessel equipped with a condenser, nitrogen inlet, thermometer and stirrer, was placed a monomer emulsion consisting of 229.2 parts of 2EHA, 8.6 parts ofAA, 48.7 parts of IBXMA, 336.8 parts of ion-exchanged water and 23.9 parts of emulsifier (AD-25R) with 24 % active ingredient. The resultant was stirred under nitrogen gas flow at 60 °C for over one hour. To the reaction vessel, was placed 2.9 parts of initiator (VA-057) adjusted with ion-exchanged water to a 10 % concentration. The reaction was carried out for two hours while keeping the system at 60 °C. The system was kept at 60 °C for three more hours. The resulting polymerization reaction mixture was cooled to room temperature and 10 % ammonia water was then added to pH 7. To 100 parts of polymer particles contained in the polymerization reaction mixture, was further added 0.01 part of epoxy-based crosslinking agent (TETRAD C) to prepare a PSA composition according to this example.

<Comparative Example 10: blend of PSA compositions>

(PSA composition A)

To a reaction vessel equipped with a condenser, nitrogen inlet, thermometer and stirrer, was placed a monomer emulsion A consisting of 286.5 parts of IBXMA, 336.7 parts of ion-exchanged water and 23.9 parts of emulsifier (AD-25R) with 24 % active ingredient. The mixture was stirred under nitrogen gas flow at 60 °C for over one hour. To the reaction vessel, was placed 2.9 parts of initiator (VA-057) adjusted with ion-exchanged water to a 10 % concentration. The reaction was carried out for two hours while keeping the system at 60 °C. The system was kept at 60 °C for three more hours. The system was cooled to room temperature and 10 % ammonia water was added to pH 7. A water-dispersed PSA composition was thus obtained.

(PSA composition B)

To a reaction vessel equipped with a condenser, nitrogen inlet, thermometer and stirrer, were added 232.1 parts of ion-exchanged water and 2.4 parts of emulsifier (AD-25R) with 24 % active ingredient. To the reaction vessel, was added 2.9 parts of initiator (VA-057) adjusted with ion-exchanged water to a 10 % concentration. To this, was gradually added dropwise over six hours a monomer emulsion B consisting of 104.6 parts of ion-exchanged water, 276.2 parts of 2EHA, 10.3 parts of AA and 21.5 parts of emulsifier (AD-25R) with 24 % active ingredient. After completion of the dropwise addition, the system was kept at 60 °C for three more hours. The system was cooled to room temperature and 10 % ammonia water was added to pH 7. A water-dispersed PSA composition B was thus obtained.

(Mixing of compositions A and B)

Were mixed 17 parts of PSA composition A based on non-volatile content and 83 parts of PSA composition B based on non-volatile content. To 100 parts of the non-volatiles in the mixture, was added 0.01 part of epoxy-based crosslinking agent (TETRAD C) to prepare a PSA composition according to this example.

<Comparative Example 11>

(First step)

To a reaction vessel equipped with a condenser, nitrogen inlet, thermometer and stirrer, was placed a monomer emulsion consisting of 336.8 parts of ion-exchanged water, 138.9 parts of 2EHA, 4.3 parts of AA and 23.9 parts of emulsifier (AD-25R) with 24 % active ingredient. The mixture was stirred under nitrogen gas flow at 60 °C for over one hour. To the reaction vessel, was placed 1.4 parts of initiator (VA-057) adjusted with ion-exchanged water to a 10 % concentration. The reaction was carried out for two hours while keeping the system at 60 °C.

(Second step)

Subsequently, was added 1.4 parts of initiator (VA-057) adjusted with ion-exchanged water to a 10 % concentration. While keeping the system at 60 °C, was gradually added dropwise over three hours a monomer mixture consisting of 90.2 parts of 2EHA, 4.3 parts of AA and 48.7 parts of IBXMA. After completion of the dropwise addition, the system was store at 60 °C for three more hours.

(Preparation of PSA composition)

The resulting polymerization reaction mixture was cooled to room temperature and 10 % ammonia water was added to pH 7. To 100 parts of polymer particles contained in the polymerization reaction mixture, was added 0.01 part of epoxy-based crosslinking agent (TETRAD C) to prepare a PSA composition according to this example.

<Comparative 12>

In the first step of Example 11, in place of the monomer emulsion of Example 11, was used a monomer emulsion consisting of 336.8 parts of ion-exchanged water, 138.9 parts of BA, 4.3 parts of AA and 23.9 parts of emulsifier (AD-25R) with 24 % active ingredient. Otherwise, in the same manner as Comparative Example 11, a PSA composition according to this example was prepared.

<Measurement of average particle diameter>

With respect to the PSA compositions of Example 1 to Example 12, the average particle diameters were measured based on ISO 13320:2009 "Particle size analysis -- Laser diffraction methods". More specifically, the size distributions were obtained by a laser diffraction/scattering particle size analyzer under model number "LS 13 320" available from Beckman Coulter, Inc., and the median diameters were determined based on a polybutyl acrylate standard.

<Measurement of gel fraction>

The PSA compositions of Example 1 to Example 12 were allowed to dry at 100 °C for three minutes to form PSA layers having a thickness of about 40 $\mu$m. Samples were collected from these PSA layers and subjected to gel fraction measurements by the method described earlier. As the porous PTFE membrane, trade name "NITOFURON® NTF1122" was used.

<Impact resistance test>

[Fabrication of double-faced PSA sheet with film substrate]

Using the PSA composition according to each example, a double-faced PSA sheet with a film substrate was fabricated.
More specifically, as release liners, were obtained two sheets of polyethylene terephthalate (PET) film having a face with a release surface treated with a silicone-based release agent. As the PET film, was used trade name "DIAFOIL® MRF38" available from Mitsubishi Polyester Film Group.
To the first face of 25 $\mu$m thick PET film (a film substrate) as a substrate, the PSA composition according to each example was applied with an applicator and allowed to dry at 100 °C for three minutes to form a first PSA layer of 40 $\mu$m thickness. As the film substrate, was used trade name "LUMIRROR® S10" available from Toray Industries, Inc. The amount of the PSA composition applied was adjusted so as to form a 40 $\mu$m thick PSA layer after dried. To the surface of the first PSA layer, the release surface of the first release liner was adhered for protection.
On the other hand, to the release surface of the second release liner, the PSA composition according to each example was applied with an applicator and allowed to dry at 100 °C for three minutes to form a second PSA layer of 40 $\mu$m thickness.
The second PSA layer was adhered to the second face (back face) of the film substrate to fabricate a double-faced PSA sheet having the first PSA layer and the second PSA layer on the first face and the second face, respectively, of the 25 $\mu$m thick film substrate. The surface (first adhesive surface) of the first PSA layer and the surface (second adhesive surface) of the second PSA layer of the double-faced PSA sheet are protected with the first and second release liners, respectively.

[Impact resistance test]

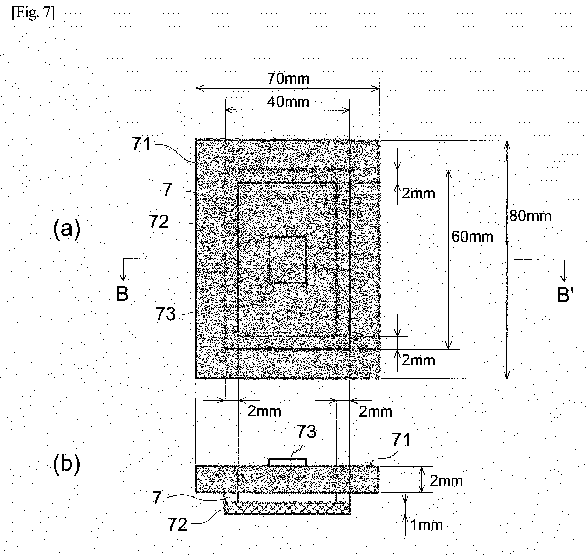

The double-faced PSA sheet according to each example was cut into a frame shape having a 40 mm by 60 mm outer frame and a border width of 2 mm as shown in Fig. 7. With the frame-shape double-faced PSA sheet, a polymethyl methacrylate resin plate (acrylic plate) and a polycarbonate plate (PC plate) were joined together to fabricate a test sample. More specifically, the first adhesive surface of the frame-shape double-faced PSA sheet was adhered to an acrylic plate of 40 mm width, 60 mm length and 1 mm thickness, with a 2 kg roller moved back and forth once. The resultant was left standing at 23 °C for 24 hours. Subsequently, the second adhesive surface of the frame-shape double-faced PSA sheet was adhered to the first face of a PC plate of 70 mm width, 80 mm length and 2 mm thickness, with a 2 kg roller moved back and forth once. Subsequently, a weight was attached to the second face of the PC plate to adjust the weight of the test sample to 110 g.

Fig. 7 shows a schematic drawing of the test sample, with (a) showing its upper face while (b) showing a cross section across the B-B' line. In Fig. 7, reference numeral 71 indicates the PC plate, numeral 7 the frame-shaped double-faced PSA sheet, numeral 72 the acrylic plate, and numeral 73 the weight for the test sample weight adjustment.

(Drop test at room temperature)

At 23 °C, the test sample was subjected to 18 repeated rounds of free drop from a height of 1.2 m to a concrete board and the number of dropping rounds taken until the acrylic plate fell off the PC plate was recorded. During this operation, the spatial orientation of the test sample was changed so that the underside was alternated among its six faces. In other words, with respect to each of the six faces, a single dropping pattern was repeated for three rounds. When no fall-off occurred after 18 dropping rounds, the sample was subjected to a subsequent drop test at a lower temperature.

(Drop test at lower temperature)

The sample after the room temperature drop test was stored in an environment at -5 °C for 30 minutes. Subsequently, the sample was subjected to repeated rounds of free drop from a height of 1.2 m to a concrete board in the -5 °C environment and the number of dropping rounds taken until the acrylic plate fell off the PC plate was recorded. During this operation, the spatial orientation of the test sample was changed so that the underside was alternated among its six faces.

The impact resistance test was performed with three test samples (i.e. n = 3) for the PSA sheet according to each example, and the impact resistance was evaluated based on the average value of the number of dropping rounds. The results obtained are shown in Table 1 and Table 2. In these Tables, "E" (excellent) indicates that no fall-off occurred in the room temperature drop test and the number of dropping rounds taken to a fall-off in the lower temperature drop test was 5 or over, "G" (good) indicates that no fall-off occurred in the room temperature drop test and the number of dropping rounds taken to a fall-off in the lower temperature drop test was fewer than 5, "A" (acceptable) indicates that the number of dropping rounds taken to a fall-off in the room temperature drop test was 10 or over, but 18 or fewer, and "P" (poor) indicates that the number of dropping rounds taken to a fall-off in the room temperature drop test was fewer than 10. In the parentheses, the actual numbers of dropping rounds taken to the fall-off are indicated in the order of the room temperature drop test result/lower temperature drop test result. For samples with which the room temperature drop test resulted in a fall-off, the lower temperature drop test result is indicated as "--".

<Repulsion resistance test>

[Fabrication of substrate-free PSA sheet]

With the PSA composition according to each example, a substrate-free PSA sheet was fabricated.

More specifically, two sheets of the release liner were obtained. To the release surface (releasable surface) of the first release liner, the PSA composition according to each example was applied with an applicator and allowed to dry at 100 °C for three minutes to form a 40 µm thick PSA layer on the release surface. To the surface of the PSA layer, the release surface of the second release liner was adhered to obtain a substrate-free PSA sheet in which both faces of the PSA layer are protected with the first and second release liners, respectively.

[Repulsion resistance test]

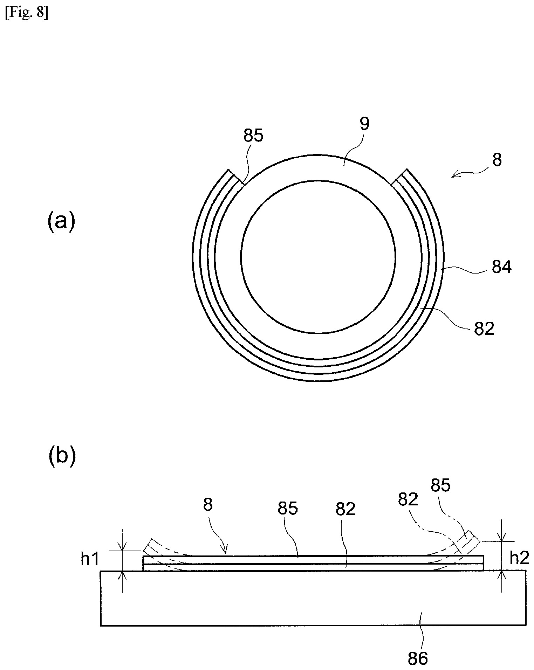

The substrate-free PSA sheet was cut along with the two release liners into 10 mm wide by 90 mm long. A surface of an aluminum plate of 10 mm width, 90 mm length and 0.3 mm thickness was washed with toluene. The first release liner was removed from the substrate-free PSA sheet and the exposed adhesive surface was adhered to the surface of the aluminum plate to fabricate a test piece with the PSA layer being backed with the aluminum plate. The test piece was left standing at 23 °C for one day. As shown in Fig. 8(a), with the aluminum plate 85 side of test piece 8 being on the inside, test piece 8 was warped by placing the length direction of test piece 8 around the circumference of a 40 mm diameter round glass tube 9 for 10 seconds. Subsequently, the second release liner 84 was removed from the PSA layer 82 of test piece 8 and, as shown in Fig. 8(b), was pressure-bonded to a pre-washed surface of an acrylic plate (adherend) 86 at a bonding pressure of 0.25 MPa and a bonding speed of 0.3 m/min, using a small laminator available from Taisei Laminator Co., Ltd. After 24 hours at 23 °C, as shown by imaginary lines in Fig. 8(b), the distances h1 and h2 over which test piece 8 floated above adherend 86 at both ends were measured and the average value between the two ends was determined as the floating distance of test piece 8.

The repulsion resistance test was performed with three test pieces (i.e. n = 3) with respect to the PSA sheet according to each example. Based on the average floating distance among these test pieces, the repulsion resistance was evaluated. The results obtained are shown in Table 1 and Table 2. In these tables, "E" (excellent) indicates that the floating distance was 1.0 mm or smaller, "G" (good) indicates that the floating distance was larger than 1.0 mm, but 1.5 mm or smaller, "A" (acceptable) indicates that the floating distance was larger than 1.5 mm, but 2.0 mm or smaller, and "P" (poor) indicates that the repulsion resistance was poor and the floating distance was larger than 2.0 mm. In the parentheses, the actual floating distances are shown in mm.

[Table 1]

Table 1

| Example | 1 | | 2 | | 3 | | 4 | | 5 | |
|---|---|---|---|---|---|---|---|---|---|---|
| Form of monomer(s) | First Emulsion | Second Mixture | First Emulsion | Second Mixture | First Emulsion | Second Mixture | First Emulsion | Second Mixture | First Emulsion | Second Mixture |
| Weight proportions of monomers (wt%) | 17 | 83 | 17 | 83 | 17 | 83 | 17 | 83 | 17 | 83 |
| Monomer composition (wt%) 2EHA | 0 | 96.4 | 10 | 96.4 | 40 | 96.4 | 0 | 96.4 | 10 | 96.4 |
| BA | 0 | 0 | 0 | 0 | 0 | 0 | 0 | 0 | 0 | 0 |
| IBXMA | 100 | 0 | 90 | 0 | 60 | 0 | 100 | 0 | 90 | 0 |
| MMA | 0 | 0 | 0 | 0 | 0 | 0 | 0 | 0 | 0 | 0 |
| AA | 0 | 3.6 | 0 | 3.6 | 0 | 3.6 | 0 | 3.6 | 0 | 3.6 |
| KBM-503 | 0 | 0 | 0 | 0 | 0 | 0 | 0 | 0 | 0 | 0 |
| Initiator (parts) (per 100 parts of monomer(s)) VA-057 | 0.1 | 0.1 | 0.1 | 0.1 | 0.1 | 0.1 | 0.1 | 0.1 | 0.1 | 0.1 |
| APS | 0 | 0 | 0 | 0 | 0 | 0 | 0 | 0 | 0 | 0 |
| Emulsifier (parts) (per 100 parts of monomer(s)) AD-25R | 11.8 | 0 | 11.8 | 0 | 11.8 | 0 | 11.8 | 0 | 11.8 | 0 |
| HS-10 | 0 | 0 | 0 | 0 | 0 | 0 | 0 | 0 | 0 | 0 |
| Chain transfer agent (parts) (per 100 parts of monomer(s)) | 0 | 0 | 0 | 0 | 0 | 0 | 0 | 0.06 | 0 | 0.06 |
| Crosslinking agent (parts)(per 100 parts of polymer particles) | 0.01 | | 0 | | 0 | | 0.01 | | 0.01 | |
| Gel fraction (%) | 81.8 | | 82.2 | | 75.6 | | 64.1 | | 64.8 | |
| SP value | 9.68 | 9.90 | 9.66 | 9.90 | 9.60 | 9.90 | 9.68 | 9.90 | 9.66 | 9.90 |
| Difference in SP value | -0.22 | | -0.24 | | -0.30 | | -0.22 | | -0.24 | |
| Tg (°C) | 180.0 | -66.6 | 130.3 | -66.6 | 30.5 | -66.6 | 180.0 | -66.6 | 130.3 | -66.6 |
| Difference in Tg (°C) | 246.6 | | 196.9 | | 97.1 | | 246.6 | | 196.9 | |
| Average Tg (°C) | -45.5 | | -47.9 | | -54.7 | | -45.5 | | -47.9 | |
| Average particle diameter (μm) | 0.11 | | 0.12 | | 0.12 | | 0.10 | | 0.11 | |

(continued)

| Example | | 1 | 2 | 3 | 4 | 5 |
|---|---|---|---|---|---|---|
| Emulsifier content (parts) (per 100 parts of polymer particles) | | 2 | 2 | 2 | 2 | 2 |
| Properties | Impact resistance (23°C(rounds)/-5°C (rounds)) | (18/6.7) | (10.7/-) | (18/10.7) | (18/8) | (18/1) |
| | Repulsion resistance (floating distance (mm)) | (0.4) | (1.0) | (1.2) | (1.1) | (1.9) |

[Table 2]

Table2

| | | 6 | | 7 | | 8 | | 9 | 10 | | 11 | | 12 | |
|---|---|---|---|---|---|---|---|---|---|---|---|---|---|---|
| Example | | First | Second | First | Second | First | Second | One-step | A | B | First | Second | First | Second |
| Form of monomer(s) | | Emulsion | Emulsion | Emulsion | Emulsion | Emulsion | Emulsion | Emulsion | Emulsion | Emulsion | Emulsion | Mixture | Emulsion | Mixture |
| Weight proportions of monomers (wt%) | | 17 | 83 | 17 | 83 | 20 | 80 | 100 | 17 | 83 | 50 | 50 | 50 | 50 |
| Monomer composition (wt%) | 2EHA | 0 | 96.4 | 0 | 96.4 | 0 | 0 | 80 | 0 | 96.4 | 97 | 63 | 0 | 63 |
| | BA | 0 | 0 | 0 | 0 | 8 | 94.95 | 0 | 0 | 0 | 0 | 0 | 97 | 0 |
| | IBXMA | 100 | 0 | 100 | 0 | 0 | 0 | 17 | 100 | 0 | 0 | 34 | 0 | 34 |
| | MMA | 0 | 0 | 0 | 0 | 90 | 0 | 0 | 0 | 0 | 0 | 0 | 0 | 0 |
| | AA | 0 | 3.6 | 0 | 3.6 | 2 | 5 | 3 | 0 | 3.6 | 3 | 3 | 3 | 3 |
| | KBM-503 | 0 | 0 | 0 | 0 | 0 | 0.05 | 0 | 0 | 0 | 0 | 0 | 0 | 0 |
| Initiator (parts) (per 100 parts of monomer(s)) | VA-057 | 0.1 | 0.1 | 0.1 | 0.1 | 0 | 0 | 0.1 | 0.1 | 0.1 | 0.1 | 0.1 | 0.1 | 0.1 |
| | APS | 0 | 0 | 0 | 0 | 0.3 | 0 | 0 | 0 | 0 | 0 | 0 | 0 | 0 |
| Emulsifier (parts) (per 100 parts of monomer(s)) | AD-25R | 2 | 2 | 14 | 2 | 0 | 0 | 2 | 2 | 2 | 4 | 0 | 4 | 0 |
| | HS-10 | 0 | 0 | 0 | 0 | 4 | 4 | 0 | 0 | 0 | 0 | 0 | 0 | 0 |
| Chain transfer agent (parts) (per 100 parts of monomer(s)) | | 0 | 0 | 0 | 0 | 0 | 0 | 0 | 0 | 0 | 0 | 0 | 0 | 0 |
| Crosslinking agent (parts) (per 100 parts of polymer particles) | | 0.01 | | 0.01 | | 0.01 | | 0.01 | 0.01 | | 0.01 | | 0.01 | |
| Gel fraction (%) | | 81.2 | | 79.4 | | 94.7 | | 83.5 | 83 | | 83.6 | | 82 | |
| SP value | | 9.68 | 9.90 | 9.68 | 9.90 | 10.61 | 10.54 | 9.87 | 9.68 | 9.90 | 9.84 | 9.91 | 10.41 | 9.91 |
| Difference in SP value | | -0.22 | | -0.22 | | 0.07 | | - | -0.22 | | -0.07 | | 0.50 | |
| Tg (°C) | | 180 | -66.6 | 180.0 | -66.6 | 84.0 | -50.3 | -45.5 | 180.0 | -66.6 | -67.2 | -18.8 | -52.2 | -18.8 |
| Difference in Tg (°C) | | 246.6 | | 246.6 | | 134.3 | | - | 246.6 | | -48.4 | | -33.4 | |

EP 2 818 486 B1

25

(continued)

| | Example | 6 | 7 | 8 | 9 | 10 | | 11 | 12 |
|---|---|---|---|---|---|---|---|---|---|
| Average Tg (°C) | | -45.5 | -45.5 | -32.2 | -45.5 | -45.5 | | -45.5 | -36.7 |
| Average particle diameter (μm) | | 0.35 | 0.11 | 0.13 | 0.09 | 0.10 | 0.13 | 0.13 | 0.14 |
| Emulsifier content (parts) (per 100 parts of polymer particles) | | 2 | 4 | 4 | 2 | 2 | | 2 | 2 |
| Properties | Impact resistance (23°C (rounds)/-5°C (rounds)) | (18/5) | (5.7/-) | (14.3/-) | (6.7/-) | (4/-) | | (3.3/-) | (1.7/-) |
| | Repulsion resistance (floating distance (mm)) | (15) | (22) | (2.2) | (0.1) | (18) | | (2.1) | (0.1) |

As shown in Table 1, with respect to the PSA compositions of Examples 1 to 5 each having a Tg difference ($T_{core}$ - $T_{shell}$) greater than 0, an emulsifier content below 3.5 parts by weight per 100 parts of polymer particles and an average particle diameter smaller than 0.3 $\mu$m, all exhibited sufficient levels of performance for practical use in the impact resistance test and the repulsion resistance test. In comparison of Example 1 with Example 2 having similar average Tg values, higher impact resistance was obtained with Example 1 having a Tg ($T_{core}$) of 150 °C or higher when determined based on the composition of the first monomeric starting material. Also in comparison of Example 4 with Example 5, both of which used a chain transfer agent for polymerization in the second step, a tendency similar to that between Example 1 and Example 2 was observed. With respect to Example 4 which used a chain transfer agent for polymerization of the second step in Example 1, the repulsion resistance tended to somewhat decrease while the impact resistance tended to increase further. Similar tendencies were observed in comparison of Example 2 with Example 5. As revealed from comparison between Example 2 and Example 3, with decreasing average Tg ($T_{ave}$), the repulsion resistance tended to somewhat decrease while the impact resistance tended to increase further.

On the contrary, as shown in Table 2, with respect to Comparative Example 6 in which the emulsifier content per 100 parts of polymer particles was the same as Examples 1 to 5 while the monomer emulsion was added in the second step, as a result of the smaller amount of emulsifier available for use in the first step, the average particle diameter was 0.3 $\mu$m or larger and the repulsion resistance decreased. With respect to Comparative Examples 7 and 8 in which the emulsifier content per 100 parts of polymer particles was increased to 3.5 parts or higher, although PSA compositions were obtained having average particle diameters smaller than 0.3 $\mu$m, the repulsion resistance was not comparable to Examples 1 to 5. Additionally, the impact resistance decreased in Comparative Examples 7 and 8 when compared to Comparative Example 6. Comparative Example 9 in which the PSA composition was produced in one-step polymerization lacked a balance between impact resistance and repulsion resistance. With respect to Comparative Example 10 prepared by blending water-dispersed PSA compositions having different monomer compositions, both the impact resistance and repulsion resistance were insufficient. As for Comparative Example 11 and Comparative Example 12 in which the second monomeric starting material were added as monomer mixtures in the second step, due to the Tg difference being smaller than 0, etc., impact resistance and repulsion resistance were not combined at a sufficient level for practical use.

**Claims**

1.  A water-dispersed pressure-sensitive adhesive composition comprising an aqueous solvent, an emulsifier and polymer particles, wherein

    the polymer particles are dispersed in the aqueous solvent;

    the polymer particles comprise a particle that has a core-shell structure and comprises an acrylic polymer in at least one of its core and shell;

    in the particle having the core-shell structure, a polymer $P_{core}$ constituting the core has a glass transition temperature $T_{core}$ and a polymer $P_{shell}$ constituting the shell has a glass transition temperature $T_{shell}$ with $T_{core}$ being higher than $T_{shell}$ and $T_{shell}$ being below -55°C, wherein $T_{core}$ and $T_{shell}$ refer to values determined with respect to monomer compositions corresponding to $P_{core}$ and $P_{shell}$, respectively, according to the Fox equation based on the glass transition temperature (Tg) values of homopolymers of the respective monomers and the weight fractions (copolymerization ratio values based on weight) of the monomers;

    the emulsifier content in the pressure-sensitive adhesive composition is lower than 3.5 parts by weight relative to 100 parts by weight of the polymer particles; and

    the average particle diameter of the pressure-sensitive adhesive composition is smaller than 0.3 $\mu$m when measured by a laser diffraction/scattering method.

2.  The water-dispersed pressure-sensitive adhesive composition according to Claim 1, wherein $T_{core}$ is higher by 80°C or more than $T_{shell}$.

3.  The water-dispersed pressure-sensitive adhesive composition according to Claim 1 or 2, wherein a pressure-sensitive adhesive formed from the pressure-sensitive adhesive composition has a gel fraction of 70 % by weight or higher.

4.  The water-dispersed pressure-sensitive adhesive composition according to any one of Claims 1 to 3, wherein, when $P_{core}$ has an SP value $SP_{core}$ and $P_{shell}$ has an SP value $SP_{shell}$, $SP_{core}$ and $SP_{shell}$ satisfy a relationship defined by the following equation:

$$-0.35 < (SP_{core} - SP_{shell}) < -0.05,$$

wherein the SP value refers to a solubility parameter value determined according to the following equation:

$$SP\ value\ (\delta\ (cal/cm^3)^{1/2}) = (\Sigma\Delta e/\Sigma\Delta v)^{1/2},$$

wherein $\Delta e$ (cal) designates the vaporization energy of each atom or an atomic group at 25°C and $\Delta v$ (cm$^3$) designates the molar volume of the atom or the atomic group at 25°C.

5. A method for producing a water-dispersed pressure-sensitive adhesive composition comprising:

a first step of obtaining a first dispersion that comprises seed particles obtainable by polymerizing a first monomeric starting material, an emulsifier and an aqueous solvent; and
a second step of adding a second monomeric starting material to the first dispersion to obtain a second dispersion comprising polymer particles dispersed in the aqueous solvent; wherein
at least one of the first monomeric starting material and the second monomeric starting material comprises an acrylic monomer;
in the second step, to the first dispersion, the second monomeric starting material is added in a form of a monomer mixture essentially free of an emulsifier;
the emulsifier content in the second dispersion is lower than 3.5 parts by weight relative to 100 parts by weight of the polymer particles; and
the average particle diameter of the second dispersion is smaller than 0.3 $\mu$m when measured by a laser diffraction/scattering method.

6. The method according to Claim 5, wherein the SP value (SP2) of the polymer of the second monomeric starting material is greater than the SP value (SP1) of the polymer constituting the seed particles.

7. The method according to Claim 5 or 6, wherein, when the first monomeric starting material has a weight M1 and the second monomeric starting material has a weight M2, the M2 to M1 ratio (M2/M1) is higher than 60/40.

8. The method according to any one of Claims 5 to 7, wherein the step of obtaining the first dispersion comprises subjecting a monomer emulsion to emulsion polymerization so as to form the seed particles, with the monomer emulsion being obtainable by emulsifying a mixture of the first monomeric starting material, the emulsifier and the aqueous solvent.

9. A water-dispersed pressure-sensitive adhesive composition produced by the method according to any one of Claims 5 to 8.

10. A pressure-sensitive adhesive sheet comprising a pressure-sensitive adhesive layer formed with the water-dispersed pressure-sensitive adhesive composition according to any one of Claims 1 to 4 and 9.

**Patentansprüche**

1. Wasserdispergierte druckempfindliche Klebstoffzusammensetzung, umfassend ein wässriges Lösungsmittel, einen Emulgator und Polymerteilchen, wobei
die Polymerteilchen in dem wässrigen Lösungsmittel dispergiert sind;
die Polymerteilchen ein Teilchen umfassen, das eine Kern-Schale-Struktur aufweist und ein Acrylpolymer in mindestens einem von dessen Kern und Schale umfasst;
in dem Teilchen mit der Kern-Schale-Struktur ein Polymer $P_{core}$, das den Kern bildet, eine Glasübergangstemperatur $T_{core}$ aufweist, und ein Polymer $P_{shell}$, das die Schale bildet, eine Glasübergangstemperatur $T_{shell}$ aufweist, wobei $T_{core}$ höher als $T_{shell}$ ist und $T_{shell}$ unter -55°C liegt, wobei sich $T_{core}$ und $T_{shell}$ auf Werte beziehen, die in Bezug auf Monomerzusammensetzungen entsprechend $P_{core}$ bzw. $P_{shell}$ gemäß der Fox-Gleichung auf Basis der Glasübergangstemperatur (Tg)-Werte von Homopolymeren der jeweiligen Monomere und der Gewichtsanteile (Werte des Copolymerisationsverhältnisses bezogen auf das Gewicht) der Monomere bestimmt wurden;

der Emulgatorgehalt in der druckempfindliche Klebstoffzusammensetzung niedriger als 3,5 Gewichtsteile, bezogen auf 100 Gewichtsteile der Polymerteilchen, ist; und

der mittlere Teilchendurchmesser der druckempfindlichen Klebstoffzusammensetzung kleiner als 0,3 $\mu$m ist, wenn er durch ein Laserbeugungs-/Streuverfahren gemessen wird.

2.  Wasserdispergierte druckempfindliche Klebstoffzusammensetzung nach Anspruch 1, wobei $T_{core}$ um 80°C oder mehr höher als $T_{shell}$ ist.

3.  Wasserdispergierte druckempfindliche Klebstoffzusammensetzung nach Anspruch 1 oder 2, wobei ein aus der druckempfindliche Klebstoffzusammensetzung gebildeter Haftkleber einen Gelanteil von 70 Gew.-% oder mehr aufweist.

4.  Wasserdispergierte druckempfindliche Klebstoffzusammensetzung nach einem der Ansprüche 1 bis 3, wobei, wenn $P_{core}$ einen SP-Wert $SP_{core}$ aufweist, und $P_{shell}$ einen SP-Wert $SP_{shell}$ aufweist, $SP_{core}$ und $SP_{shell}$ eine Beziehung erfüllen, die durch die folgende Gleichung definiert ist:

$$-0,35 < (SP_{core} - SP_{shell}) < -0.05,$$

wobei sich der SP-Wert auf einen Löslichkeitsparameterwert bezieht, der gemäß der folgenden Gleichung bestimmt wird:

$$\text{SP-Wert } (\delta \text{ (cal/cm}^3)^{1/2}) = (\Sigma\Delta e/\Sigma\Delta v)^{1/2},$$

wobei $\Delta e$ (cal) die Verdampfungsenergie jedes Atoms oder einer Atomgruppe bei 25°C bezeichnet und $\Delta v$ (cm$^3$) das Molvolumen des Atoms oder der Atomgruppe bei 25°C bezeichnet.

5.  Verfahren zur Herstellung einer wasserdispergierten druckempfindlichen Klebstoffzusammensetzung, umfassend:

einen ersten Schritt des Erhaltens einer ersten Dispersion, die Keimpartikel, die durch Polymerisation eines ersten monomeren Ausgangsmaterials erhältlich sind, einen Emulgator und ein wässriges Lösungsmittel enthält; und

einen zweiten Schritt des Hinzufügens eines zweiten monomeren Ausgangsmaterials zu der ersten Dispersion, um eine zweite Dispersion zu erhalten, die Polymerteilchen umfasst, die in dem wässrigen Lösungsmittel dispergiert sind; wobei

mindestens eines des ersten monomeren Ausgangsmaterials und des zweiten monomeren Ausgangsmaterials ein Acrylmonomer umfasst;

das zweite monomere Ausgangsmaterial im zweiten Schritt in Form einer Monomermischung, die im Wesentlichen frei von einem Emulgator ist, zur ersten Dispersion zugegeben wird;

der Emulgatorgehalt in der zweiten Dispersion weniger als 3,5 Gewichtsteile beträgt, bezogen auf 100 Gewichtsteile der Polymerteilchen; und

der mittlere Teilchendurchmesser der zweiten Dispersion kleiner als 0,3 $\mu$m ist, wenn er durch ein Laserbeugungs-/Streuverfahren gemessen wird.

6.  Verfahren nach Anspruch 5, wobei der SP-Wert (SP2) des Polymers des zweiten monomeren Ausgangsmaterials größer ist als der SP-Wert (SP1) des die Keimpartikel bildenden Polymers.

7.  Verfahren nach Anspruch 5 oder 6, wobei, wenn das erste monomere Ausgangsmaterial ein Gewicht M1 aufweist und das zweite monomere Ausgangsmaterial ein Gewicht M2 aufweist, das Verhältnis von M2 zu M1 (M2/M1) größer als 60/40 ist.

8.  Verfahren nach einem der Ansprüche 5 bis 7, wobei der Schritt des Erhaltens der ersten Dispersion das Unterwerfen einer Monomeremulsion einer Emulsionspolymerisation umfasst, um die Keimpartikel zu bilden, wobei die Monomeremulsion durch Emulgieren einer Mischung des ersten monomeren Ausgangsmaterials, des Emulgators und des wässrigen Lösungsmittels erhältlich ist.

9. Wasserdispergierte druckempfindliche Klebstoffzusammensetzung, hergestellt nach dem Verfahren nach einem der Ansprüche 5 bis 8.

10. Haftklebefolie mit einer druckempfindlichen Klebeschicht, die mit der wasserdispergierten druckempfindlichen Klebstoffzusammensetzung nach einem der Ansprüche 1 bis 4 und 9 gebildet ist.

**Revendications**

1. Composition d'adhésif sensible à la pression dispersée dans l'eau comprenant un solvant aqueux, un émulsifiant et des particules polymères, où
les particules polymères sont dispersées dans le solvant aqueux ;
les particules polymères comprennent une particule qui a une structure noyau-enveloppe et comprend un polymère acrylique dans l'un au moins de son noyau et de son enveloppe ;
dans la particule ayant la structure noyau-enveloppe, un polymère $P_{noyau}$ constituant le noyau a une température de transition vitreuse $T_{noyau}$ et un polymère $P_{enveloppe}$ constituant l'enveloppe a une température de transition vitreuse $T_{enveloppe}$, $T_{noyau}$ étant supérieure à $T_{enveloppe}$ et $T_{enveloppe}$ étant inférieure à -55 °C, où $T_{noyau}$ et $T_{enveloppe}$ désignent des valeurs déterminées par rapport à des compositions de monomères correspondant respectivement à $P_{noyau}$ et $P_{enveloppe}$, selon l'équation de Fox basée sur les valeurs de température de transition vitreuse (Tg) d'homopolymères des monomères respectifs et les fractions massiques (valeurs de rapport de copolymérisation basées sur le poids) des monomères ;
la teneur en émulsifiant dans la composition d'adhésif sensible à la pression est inférieure à 3,5 parties en poids pour 100 parties en poids des particules polymères ; et
le diamètre moyen de particule de la composition d'adhésif sensible à la pression est inférieur à 0,3 μm quand il est mesuré par une méthode de diffraction/diffusion laser.

2. Composition d'adhésif sensible à la pression dispersée dans l'eau selon la revendication 1, où $T_{noyau}$ est supérieure d'au moins 80 °C à $T_{enveloppe}$.

3. Composition d'adhésif sensible à la pression dispersée dans l'eau selon la revendication 1 ou 2, où un adhésif sensible à la pression formé à partir de la composition d'adhésif sensible à la pression a une fraction de gel de 70 % en poids ou plus.

4. Composition d'adhésif sensible à la pression dispersée dans l'eau selon l'une quelconque des revendications 1 à 3, dans laquelle, lorsque $P_{noyau}$ a une valeur SP notée $SP_{noyau}$ et $P_{enveloppe}$ a une valeur SP notée $SP_{enveloppe}$, $SP_{noyau}$ et $SP_{enveloppe}$ satisfont une relation définie par l'équation suivante :

$$-0,35 < (SP_{noyau} - SP_{enveloppe}) < -0,05,$$

où la valeur SP désigne une valeur de paramètre de solubilité déterminée d'après l'équation suivante :

$$\text{valeur SP } (\delta \ (cal/cm^3)^{1/2}) = (\Sigma\Delta e/\Sigma\Delta v)^{1/2},$$

où $\Delta e$ (cal) désigne l'énergie de vaporisation de chaque atome ou d'un groupe atomique à 25 °C et $\Delta v$ (cm$^3$) désigne le volume molaire de l'atome ou du groupe atomique à 25 °C.

5. Procédé de production d'une composition d'adhésif sensible à la pression dispersée dans l'eau comprenant :

une première étape consistant à obtenir une première dispersion qui comprend des particules germes pouvant être obtenues en polymérisant un premier matériau de départ monomère, un émulsifiant et un solvant aqueux ; et
une seconde étape consistant à ajouter un second matériau de départ monomère à la première dispersion pour obtenir une seconde dispersion comprenant des particules polymères dispersées dans le solvant aqueux ;
où
au moins l'un du premier matériau de départ monomère et du second matériau de départ monomère comprend un monomère acrylique ;

dans la seconde étape, à la première dispersion, le second matériau de départ monomère est ajouté sous la forme d'un mélange de monomères sensiblement exempt d'émulsifiant ;

la teneur en émulsifiant dans la seconde dispersion est inférieure à 3,5 parties en poids pour 100 parties en poids des particules polymères ; et

le diamètre moyen de particule de la seconde dispersion est inférieur à 0,3 $\mu$m quand il est mesuré par une méthode de diffraction/diffusion laser.

6. Procédé selon la revendication 5, dans lequel la valeur SP (SP2) du polymère du second matériau de départ monomère est supérieure à la valeur SP (SP1) du polymère constituant les particules germes.

7. Procédé selon la revendication 5 ou 6, dans lequel le premier matériau de départ monomère a une masse M1 et le second matériau de départ monomère a une masse M2, le rapport de M2 à M1 (M2/M1) étant supérieur à 60/40.

8. Procédé selon l'une quelconque des revendications 5 à 7, dans lequel l'étape d'obtention de la première dispersion comprend le fait de soumettre une émulsion de monomères à une polymérisation en émulsion de façon à former les particules germes, l'émulsion de monomères pouvant être obtenue en émulsifiant un mélange du premier matériau de départ monomère, de l'émulsifiant et du solvant aqueux.

9. Composition adhésive sensible à la pression dispersée dans l'eau produite par le procédé selon l'une quelconque des revendications 5 à 8.

10. Feuille adhésive sensible à la pression comprenant une couche d'adhésif sensible à la pression formée avec la composition d'adhésif sensible à la pression dispersée dans l'eau selon l'une quelconque des revendications 1 à 4 et 9.

[Fig. 1]

1

32
22
10
21
31

[Fig. 2]

2

22
10
21
31

[Fig. 3]

3

21B
32
21
21A
31

[Fig. 4]

[Fig. 5]

[Fig. 6]

[Fig. 7]

[Fig. 8]

(a)

(b)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012128391 A

- JP 2007051271 A

**Non-patent literature cited in the description**

- **C. A. DAHLQUIST.** Adhesion: Fundamental and Practice. McLaren & Sons, 1966, 143
- Polymer Handbook. John Wiley & Sons, Inc, 1989

- **HIDEKI YAMAMOTO.** SP value fundamentals, application, and calculation method. Johokiko Co., Ltd, 03 April 2006, 66-67